# EUROPÄISCHE PATENTSCHRIFT

(11) **EP 3 853 701 B1**
(45) Veröffentlichungstag und Bekanntmachung des Hinweises auf die Patenterteilung: **06.12.2023**
(21) Anmeldenummer: 19773757.0
(22) Anmeldetag: 17.09.2019
(51) Int. Cl.: G06F 3/039, G06K 7/08, G06K 19/067

(54) **VORRICHTUNG, SEINE VERWENDUNG UND SYSTEM ZUR ERZEUGUNG EINES PERIODISCHEN SIGNALS AUF EINEM KAPAZITIVEN FLÄCHENSENSOR**
DEVICE, USE THEREOF, AND SYSTEM FOR GENERATING A PERIODIC SIGNAL ON A CAPACITIVE SURFACE SENSOR
DISPOSITIF, SON UTILISATION ET SYSTÈME DE GÉNÉRATION D'UN SIGNAL PÉRIODIQUE SUR UN CAPTEUR SUPERFICIEL CAPACITIF

(30) Priorität: 17.09.2018 EP 18000747; 21.03.2019 EP 19164305
(43) Veröffentlichungstag der Anmeldung: 28.07.2021
(73) Patentinhaber: Prismade Labs GmbH, 09116 Chemnitz (DE)
(72) Erfinder: WEIGELT, Karin, 09116 Chemnitz (DE); THIELE, Jan, 09116 Chemnitz (DE)
(74) Vertreter: Hertin und Partner Rechts- und Patentanwälte PartG mbB
(86) Internationale Anmeldenummer: PCT/EP2019/074783
(87) Internationale Veröffentlichungsnummer: WO 2020/058231

(56) Entgegenhaltungen:
- WO-A1-2011/154524
- WO-A1-2016/131963
- WO-A1-2018/141478

## Beschreibung

Die Erfindung betrifft eine Vorrichtung und ein System zur Erzeugung eines periodischen Signals auf einem kapazitiven Flächensensor, sowie die Verwendung der Vorrichtung zur Erzeugung eines periodischen Signals auf einem kapazitiven Flächensensor. Die Vorrichtung wird von einem dreidimensionalen Objekt gebildet, auf zumindest deren Unterseite eine elektrisch leitfähige Struktur angeordnet ist. Das System umfasst eine solche Vorrichtung, sowie einen kapazitiven Flächensensor, wobei die Vorrichtung dafür verwendet werden kann, auf dem Flächensensor periodische Signale zu erzeugen.

### Stand der Technik

Im Jahr 2010 wurden erstmalig Datenträger offenbart, die von kapazitiven Touch-screens, wie sie in marktüblichen Smartphones und Tablets enthalten sind, ausgelesen werden können. Folgender Stand der Technik hat sich auf diesem Gebiet inzwischen entwickelt:
In WO 2011 154524 A1 ist ein System zur Übertragung von Informationen von einem Informationsträger auf einen kapazitiven Flächensensor beschrieben. Der Informationsträger weist eine elektrisch leitfähige Schicht auf einem elektrisch nicht leitfähigen Substrat auf, wobei die elektrisch leitfähige Schicht als "Touch-Struktur" ausgebildet ist und mindestens einen Touch-Punkt, eine Koppelfläche und/oder eine Leiterbahn umfasst. Die Touch-Punkte bilden die Eigenschaften von Fingerkuppen nach. Neben dem System ist die Verwendung des Systems sowie ein Verfahren zur Erfassung von Informationen beschrieben, die auf einer statischen oder dynamischen Wechselwirkung zwischen Flächensensor und Informationsträger beruht. Fig. 20a-c der WO 2011 154524 A1 zeigt eine Variante der Interaktion, bei der das den Flächensensor aufweisende Gerät über den Informationsträger bewegt wird und die vollständige Information des Informationsträgers nach und nach auslesbar wird. Das Dokument offenbart die Codierung der Informationen, welche insbesondere auf den Positionen der Teilbereiche basiert.

WO 2012 072648 A1 beschreibt ein Verfahren zur Erfassung von Informationen von einem Informationsträger mit Hilfe eines kapazitiven Touchscreens. Diese Anmeldung bezieht sich inhaltlich auf ein ähnliches System wie die vorgenannte Schrift. Der beschriebene Informationsträger besteht im Wesentlichen aus zwei verschiedenen Materialien, die sich hinsichtlich Leitfähigkeit oder Dielektrizitätskoeffizient unterscheiden. Durch eine Relativbewegung zwischen Informationsträger und Touchscreen wird eine Interaktion zwischen Informationsträger und Flächensensor hervorgerufen, die auf den unterschiedlichen Materialeigenschaften basiert und ein Touchsignal erzeugt. Auch in diesem Dokument umfasst das elektrisch leitfähige Muster die Grundelemente Touch-Punkte, Koppelfläche und Leiterbahnen, wobei die Leiterbahnen die Touch-Punkte untereinander und/oder mit der Koppelfläche verbinden.

WO 2016 131963 A1 beschreibt einen kapazitiven Informationsträger, der erste und zweite elektrisch leitfähige Bereiche umfasst, die mindestens teilweise miteinander verbunden sind. Mindestens zwei Unterbereiche des ersten elektrisch leitfähigen Bereichs überdecken mindestens zwei verschiedene Schnittpunkte von Sende- und Empfangselektroden des Touchscreens.

Allen genannten Anmeldungen gemeinsam ist die Grundidee, mit Hilfe der elektrisch leitfähigen Struktur, die auf einem Informationsträger angeordnet ist, die Eigenschaften von Fingerkuppen nachzubilden und somit ein Auslesen der Informationsträger auf kapazitiven Touchscreens zu ermöglichen. Da entsprechende Touchscreens somit "zweckentfremdet" genutzt wurden, war es erforderlich, die elektrisch leitfähigen Strukturen so weit anzupassen, dass der Touchscreen entsprechende Eingaben durch die elektrisch leitfähige Struktur wahrnehmen kann und nicht "herausfiltert". Die Grundidee in den Dokumenten des Standes der Technik basiert auf einer geometrischen Codierung, bei der im Wesentlichen die Relativposition der elektrisch leitfähigen Elemente der elektrisch leitfähigen Strukturen untereinander der Codierung/Decodierung zugrunde liegt.

In WO 2018 141478 A1 ist ein Verfahren zu Erzeugung eines zeitabhängigen Signals auf einem kapazitiven Flächensensor beschrieben, dessen leitfähige Struktur aus vielen Einzelelementen besteht und das zeitabhängige Signal durch eine Relativbewegung zwischen einem Eingabemittel und dem kartenähnlichen Objekt erzeugt wird. WO 2018 141479 A1 offenbart eine Vorrichtung zur Erzeugung eines zeitabhängigen Signals auf einem kapazitiven Flächensensor. Beide Anmeldungen sehen zwingend ein Eingabemittel vor, welches mit der elektrisch leitfähigen Struktur in einem dynamischen Wirkkontakt steht. Die Notwendigkeit eines Eingabemittels kann für bestimmte Anwendungen nachteilig sein.

Aufgabe der vorliegenden Erfindung ist es, eine Vorrichtung und ein System zur Erzeugung eines periodischen Signals auf einem kapazitiven Flächensensor bereitzustellen, dass nicht die Nachteile und Mängel des Standes der Technik aufweist. Ferner soll durch die bereitzustellende Vorrichtung ein periodisches Signal auf dem Flächensensor hervorgerufen werden, ohne dass dazu ein zusätzliches Eingabemittel erforderlich ist. Eine weitere Aufgabe, die der Erfindung zugrunde liegt, ist die Bereitstellung einer besonders benutzerfreundlichen interaktiven Vorrichtung, die zu Zwecken der Verifizierung, Authentifizierung und/oder Identifikation verwendet werden kann.

### Beschreibung der Erfindung:

Gelöst wird die Aufgabe durch die Merkmale der unabhängigen Ansprüche 1, 10, 13-15. Vorteilhafte Ausgestaltungen der Erfindung sind in den abhängigen Ansprüchen beschrieben.

Erfindungsgemäß ist zur Lösung der Aufgabe eine Vorrichtung zur Erzeugung eines periodischen Signals auf einem kapazitiven Flächensensor vorgesehen, wobei die Vorrichtung eine elektrisch leitfähige Struktur umfasst, die auf einem nicht-leitfähigen Substrat angeordnet vorliegt. Die Vorrichtung ist dadurch gekennzeichnet, dass die Vorrichtung ein dreidimensionales Objekt ist, wobei das dreidimensionale Objekt eine Unterseite aufweist, wobei die elektrisch leitfähige Struktur zumindest auf der Unterseite des dreidimensionalen Objekts angeordnet vorliegt und den Verlauf eines periodischen Signals festlegt.

Insbesondere betrifft die Erfindung eine Vorrichtung zur Erzeugung eines periodischen Signals auf einem kapazitiven Flächensensor mit einem Elektrodengitter umfassend Zeilen und Spalten, wobei die Vorrichtung ein dreidimensionales Objekt ist, wobei das dreidimensionale Objekt eine Kontaktfläche aufweist, wobei eine elektrisch leitfähige Struktur zumindest auf der Kontaktfläche des dreidimensionalen Objekts angeordnet vorliegt und wobei die elektrisch leitfähige Struktur und der Flächensensor derart eingerichtet sind, dass bei einer Bewegung der Vorrichtung relativ zum Flächensensor entlang der Richtung einer Zeile oder einer Spalte des Elektrodengitters, ein periodisches Signal erzeugt wird, welches orthogonal zur Bewegung der Vorrichtung oszilliert.

In einem weiteren Aspekt betrifft die Erfindung ein System umfassend die Vorrichtung sowie ein Gerät mit einem Flächensensor.

Die Erfindung betrifft somit zudem ein System zur Erzeugung eines periodischen Signals auf einem kapazitiven Flächensensor, wobei das System eine Vorrichtung sowie Gerät mit einem kapazitiven Flächensensor umfasst, wobei
a) die Vorrichtung ein dreidimensionales Objekt ist, wobei das dreidimensionale Objekt eine Kontaktfläche aufweist, wobei eine elektrisch leitfähige Struktur zumindest auf der Kontaktfläche (50) des dreidimensionalen Objekts angeordnet vorliegt
b) der kapazitiven Flächensensor ein Elektrodengitter umfassend Zeilen und Spalten aufweist,
und wobei die elektrisch leitfähige Struktur und der Flächensensor derart eingerichtet sind, dass bei einer Bewegung der Vorrichtung relativ zum Flächensensor entlang der Richtung einer Zeile oder einer Spalte des Elektrodengitters ein periodisches Signal erzeugt wird, welches orthogonal zur Bewegung der Vorrichtung oszilliert.

Die Erfinder haben herausgefunden, dass ein Zusammenhang besteht zwischen der konkreten Struktur der elektrisch leitfähigen Elemente auf der Vorrichtung beziehungsweise ihrer Anordnung zueinander und der Art und Weise, wie bei einer relativen Bewegung der Vorrichtung auf dem Flächensensor ein periodische Signal verläuft.

Als Signal im Sinne der Erfindung wird vorzugsweise der räumliche Verlauf der Eingabe auf einer Berührungsfläche bzw. einem Bildschirm eines Flächensensors verstanden, den der Flächensensor beziehungsweise sein Touch-Controller wahrnimmt. Die Berührungsfläche bezeichnet bevorzugt jene äußere Fläche eines Flächensensors, welche für eine Eingabe in Form einer Berührung vorgesehen ist. Im Falle eines Touchscreens als Flächensensor ist die Berührungsfläche der Bildschirm.

Wenn ein Nutzer mit einem Finger über die Berührungsfläche bzw. den Bildschirm eines Flächensensors fährt, so wird diese Bewegung des Fingers von dem Flächensensor als räumliches Signal detektiert, wobei der Verlauf dieses räumlichen Signals im Wesentlichen dem Verlauf der Fingerbewegung entspricht beziehungsweise mit dieser korrespondiert.

Diese Bewegung des Nutzerfingers beziehungsweise das vom Flächensensor wahrgenommene Signal kann von dem Flächensensor beispielsweise in einem Koordinatensystem mit zwei Achsen aufgezeichnet (und ggf. auf einem Bildschirm dargestellt) werden, die entsprechend der mathematischen Gepflogenheiten mit x-Achse für die horizontale Achse und y-Achse für die vertikale Achse bezeichnet werden. Eine Veränderung der x-Koordinate entspricht somit bevorzugt einer Verschiebung eines Punktes nach rechts oder links, während eine Veränderung der y-Koordinate eines Punkts einer Verschiebung nach oben oder unten entspricht. Bei der Bewegung eines Nutzerfingers über eine Berührungsfläche bzw. den Bildschirm eines Flächensensors korrespondieren die tatsächliche Bewegung und das vom Flächensensor detektierte Signale im Wesentlichen.

Wenn eine Vorrichtung mit einer elektrisch leitfähigen Struktur über eine Berührungsfläche bzw. einen Bildschirm eines Flächensensors bewegt wird, entspricht die vom Flächensensor wahrgenommene und detektierte Bewegung nicht notwendigerweise der Bewegung der Vorrichtung auf der Berührungsfläche bzw. dem Bildschirm, sondern das detektierte Signale ist durch die elektrisch leitfähige Struktur gegenüber der tatsächlichen Bewegung der Vorrichtung verändert, wobei diese Veränderung im Sinne der Erfindung vorzugsweise als Abweichung oder Verzerrung bezeichnet wird. Es stellt einen wesentlichen Verdienst der vorliegenden Erfindung dar, dass mit der vorgeschlagenen Vorrichtung eine Eingabe auf einem kapazitiven Flächensensor vorgenommen werden kann, ohne dass dabei die Verwendung eines speziellen Eingabemittels erforderlich ist.

Somit kann auf das sonst im Stand der Technik übliche und anerkannte Erfordernis eines Eingabemittels verzichtet werden, wodurch eine besonders nutzerfreundliche und einfach Bedienung eines Flächensensors beziehungsweise eine Verwendung eines Systems aus Flächensensor und Vorrichtung ermöglicht wird.

Die Vorteile, die sich dadurch ergeben, dass auf das Eingabemittel verzichtet werden kann, bestehen beispielsweise darin, dass der Nutzer nicht mehr seinen Finger für eine Eingabe auf dem Flächensensor nutzen muss. Das kann beispielsweise erwünscht sein, weil die Verwendung der Vorrichtung somit einfacher ist.

Der Nutzer kann in einer Hand das Gerät halten, welches den Flächensensor beinhaltet und mit der anderen Hand die Vorrichtung über den Flächensensor führen. Die Art und Weise der Verwendung der Vorrichtung ist von Vorteil, da es für den Nutzer sehr intuitiv ist, die Vorrichtung und das Gerät auf diese einfache Art und Weise zusammen zu bringen. Der Verzicht auf die Verwendung eines Eingabemittels kann auch deshalb von Vorteil sein, weil dadurch das Vergessen oder Verlorengehen von Eingabemitteln, wie Stylos oder speziellen Stiften, vermieden wird.

Wenn die vorgeschlagene Vorrichtung mit dem Flächensensor als System verwendet wird, wird die Benutzung der Vorrichtung insbesondere dadurch erleichtert, dass im Kontext der vorliegenden Erfindung die Vorrichtung "einfach nur" über den Flächensensor gezogen werden muss, ohne das diese Zugbewegung mit einem etwaigen Eingabemittel oder dergleichen begleitet, nachgefahren oder unterstützt werden muss.

Die Zugbewegung des dreidimensionalen Objekts wird im Sinne der Erfindung vorzugsweise auch als "Relativbewegung" zwischen Vorrichtung und Flächensensor bezeichnet. Die erfindungsgemäße Vorrichtung ermöglicht im Vergleich zum Stand der Technik vorteilhafterweise ein besonders intuitiv bedienbares und benutzerfreundliches interaktives Objekt, welches mit Hilfe eines kapazitiven Flächensensors verifiziert und/oder identifiziert werden kann.

Wenn, wie oben beschrieben, gedanklich ein xy-Koordinatensystem auf eine Berührungsfläche bzw. den Bildschirm eines Flächensensors gelegt wird, ergeben sich für die tatsächliche Bewegung der Vorrichtung und die vom Flächensensor detektierten Signale unterschiedliche Verläufe, wobei die Abweichungen insbesondere auf das Vorhandensein der elektrisch leitfähigen Struktur zurückzuführen sind. Die Ausrichtung des xy-Koordinatensystems entspricht bevorzugt der Ausrichtung eines Elektrodengitters des Flächensensors.

Die Erfinder haben erkannt, dass bei Durchführung einer Relativbewegung zwischen einer Vorrichtung, die eine geeignete elektrisch leitfähige Struktur aufweist, und einem Flächensensor ein periodisches Signal erzeugt wird, das sich in dem oben beschriebenen gedanklich xy-Koordinatensystem insbesondere als Wackel-, Schlaufen- oder Zickzackmuster äußert. Mit anderen Worten "oszilliert" das vom Flächensensor detektierte Signal um eine feste Mittellage herum, wobei die Abweichungen nach unten oder oben als "Amplituden" bezeichnet werden.

Zu diesem Zweck ist es bevorzugt, dass eine Bewegung der Vorrichtung relativ zum Flächensensor entlang der Richtung einer Zeile oder einer Spalte des Elektrodengitters erfolgt. Die elektrische Struktur ist derart eingerichtet bzw. konfiguriert, dass hierdurch der Flächensensor ein periodisches Signal detektiert, welches orthogonal zur Bewegung der Vorrichtung oszilliert.

Es ist im Sinne der Erfindung bevorzugt, dass die Begriffe "oszillieren", "pendeln" oder "wackeln" synonym untereinander verwendet werden. Insbesondere kann das gedankliche Koordinatensystem so auf den Bildschirm des Flächensensors gelegt werden, dass die x-Achse des Koordinatensystems mit der festen Mittellage, um die herum das periodische Signal schwankt, zusammenfällt. Der Verlauf des periodischen Signals kann dann vorteilhafterweise als Funktion x(y) dargestellt werden, wobei es im Sinne der Erfindung bevorzugt ist, dass diese Funktion x(y) eine Periodizität aufweist.

Die y-Richtung entspricht bevorzugt der Bewegung der Vorrichtung, während die x-Richtung eine hierzu orthogonale Richtung festlegt, in welcher das Signal um eine Mittellage oszilliert.

Es ist im Sinne der Erfindung bevorzugt, dass die Begriffe "sich wiederholend", "repetierend", "in Intervallen wiederkehrend", "zyklisch" oder"repetitiv" synonym für den Begriff "periodisch" und untereinander verwendet werden. Die hier in Verbindung mit dem gedanklichen Koordinatensystem beschriebene Periodizität wird im Sinne der Erfindung bevorzugt als räumliche Periodizität bezeichnet.

Es kann im Sinne der Erfindung auch bevorzugt sein, dass das periodische Signal in zeitlicher Hinsicht eine Periodizität aufweist. In diesem Zusammenhang kann die x- und/oder die y-Koordinate des periodisch verlaufenden Signals jeweils als Funktion der Zeit dargestellt werden, das heißt als Funktion der X-Koordinate x(t) und als Funktion der Y-Koordinate des periodischen Signals y(t). In diesem Zusammenhang stellt das periodische Signal eine zeitlich periodische Größenänderung dar, während sie im zuvor beschriebenen Fall eine räumlich periodische Größenänderung darstellt, bei der vorzugsweise räumlich variierende Größen beschrieben werden. Es ist im Sinne der Erfindung bevorzugt, dass das periodische Signal, das im Kontext der vorliegenden Erfindung erzeugt wird, auch zeitabhängig ist. Der Fachmann erkennt, dass die Darstellungen des periodischen Signals als räumlich oder zeitlich periodische Änderung in einander überführbar sind. Bei einer räumlichen Darstellung x(y) definiert die y-Koordinate bevorzugt den Bewegungsverlauf der Vorrichtung auf dem Flächensensor. Bei einer zeitlichen Darstellung x(t) definiert die t-Koordinate bevorzugt den zeitlichen Verlauf während der Bewegung der Vorrichtung auf dem Flächensensor. Unter Kenntnis von y(t) also der zeitlichen Bewegung der Vorrichtung auf dem Flächensensor lassen sich die beiden Darstellungen in einander überführen.

Die zeitliche Periodizität wird bevorzugt durch die Periodendauer des Signals charakterisiert. Es handelt sich insbesondere um ein dynamisches Signal, was im Sinne der vorliegenden Erfindung insbesondere bedeuteten soll, dass sich das periodische Signal ändert, während die Vorrichtung über den Flächensensor bewegt wird, d.h. während der Relativbewegung zwischen elektrisch leitfähiger Struktur und Flächensensor. Es ist im Sinne der Erfindung insbesondere bevorzugt, dass die elektrisch leitfähige Struktur als Signalgeber auftritt beziehungsweise als solcher fungiert.

Die elektrische Struktur ist bevorzugt derart eingerichtet ist, dass bei einer Bewegung der Vorrichtung relativ zum Flächensensor ein periodisches Signal erzeugt wird, welches orthogonal zur Bewegung der Vorrichtung oszilliert.

Es ist im Sinne der Erfindung ferner bevorzugt, dass der Verlauf des periodischen Signals insbesondere vom Flächenschwerpunkt der elektrisch leitfähigen Struktur oder von Teilbereichen der elektrisch leitfähigen Struktur beeinflusst beziehungsweise festgelegt wird. Es ist insbesondere bevorzugt, dass der Flächenschwerpunkt von Teilbereichen mit dem Elektrodengitter des kapazitiven Flächensensors wechselwirkt. In anderen Worten kann es insbesondere bevorzugt sein, dass der Flächenschwerpunkt mit ausgewählten Elektrodenkreuzungen überlappt und somit an dieser Stelle wechselwirkt. Der Flächenschwerpunkt der elektrisch leitfähigen Struktur kann beispielsweise durch den geometrischen Schwerpunkt der von der elektrisch leitfähigen Struktur bedeckten Fläche gebildet werden. Es kann auch bevorzugt sein, dass jedes Teilelement zusammen mit dem Hauptelement einen Flächenschwerpunkt bildet. Es kann aber auch bevorzugt sein, dass der Flächenschwerpunkt der elektrisch leitfähigen Struktur durch die Massenverteilung und/oder Flächenabdeckung des elektrisch leitfähigen Materials, das die elektrisch leitfähige Struktur bildet, beeinflusst wird, so dass ein gewichteter Flächenschwerpunkt der elektrisch leitfähigen Struktur ermittelt werden kann.

In einer bevorzugten Ausführungsform weist die elektrisch leitfähige Struktur mindestens zwei Teilbereiche mit zwei Flächenschwerpunkte auf, welche dazu eingerichtet sind, bei Überlagerung mit einer Kreuzung des Elektrodengitters ein Touch-Event zu erzeugen und im Falle keiner Überlagerung mit einer Kreuzung des Elektrodengitters kein Touch-Event zu erzeugen, sodass bei einer Relativbewegung des Vorrichtung entlang einer Zeile oder Spalte des Elektrodengitters ein periodischen Signal durch eine abwechselnde Erzeugung eines Touch-Event bei abwechselnder Überlagerung des ersten oder zweiten Flächenschwerpunktes mit Kreuzungen des Elektrodengitters erzeugt wird.

Bei dem Flächenschwerpunkt handelt es sich bevorzugt um einen in Bezug auf einen Teilbereich bestimmbaren geometrische Schwerpunkt. Bei Überlappung des Flächenschwerpunktes jenes Teilbereiches mit einer Elektrodenkreuzung des Flächensensors wird die Elektrodenkreuzung bevorzugt durch einen hinreichenden Anteil bzw. Fläche der elektrisch leitfähigen Struktur überdeckt, sodass ein Touch-Event ausgelöst wird.

Wie im Folgenden im Detail erläutert, basiert die Detektion von Touch-Events bei kapazitiven Flächensensoren auf einer kapazitiven Wechselwirkung, wobei kommerzielle Flächensensoren, insbesondere Touch-Screens, auf die Detektion von Fingerkuppen optimiert sind. Von dem Flächensensor soll erst dann ein Touch-Event erzeugt werden, wenn eine ausreichend kapazitive Wechselwirkung mit dessen Elektrodengitter verzeichnet wird, welcher auf eine Fingerberührung schließen lässt. Im Stand der Technik, wie der WO 2011 154524 A1, wurde die Erkenntnis ausgenutzt, um mit leitfähigen Touch-Punkten Fingerkuppen nachzubilden. Damit diese effektiv bei einer Positionierung auf einem Touchscreen erkannt werden, sollten die Touch-Punkte bevorzugt eine hinreichende Größe (bevorzugt mit einem Durchmesser von 8 mm oder mehr) aufweisen und/oder durch eine Kopplung einer Fremdkapazität (beispielsweise einer Hand) zusätzlich kapazitiv aufgeladen werden.

Die erfindungsgemäße elektrisch leitfähige Struktur sieht bevorzugt keine derartigen Touch-Punkte vor. Stattdessen sollen die bevorzugt vorhandenen mindestens zwei Teilbereiche mit zwei verschiedenen Flächenschwerpunkte nicht bei jeglicher Positionierung auf einem Flächensensor als zwei Touch-Events detektiert werden. Insbesondere sollen die zwei Flächenschwerpunkte nicht zu stabilen Touch-Events führen, sodass eine Bewegung der Vorrichtung über den Flächensensor als kontinuierliche Touch-Move detektiert wird.

Vielmehr ist es bevorzugt, dass die Teilbereiche der elektrisch leitfähigen Struktur keine Fläche, welche einer Elektrodenkreuzung (also beispielsweise 5 x 5 mm) entspricht vollständig ausfüllen. Vielmehr ist es bevorzugt, dass die Teilbereiche, zwar eine Ausdehnung haben, welche zwei, vier oder mehr Elektrodenkreuzungen, überspannen, ohne jedoch die Fläche von zwei, vier oder Elektrodenkreuzungen, vollständig auszufüllen.

Stattdessen kann es bevorzugt sein, dass die Teilbereiche derart ausgestaltet sind, dass bei einer Position, bei welcher der Flächenschwerpunkt nicht mit einer Elektrodenkreuzung überlappt, auf keiner Elektrodenkreuzung eine hinreichende Fläche mit elektrisch leitfähigem Material abgedeckt wird, um ein Touch-Event auszulösen.

Wenn der Flächenschwerpunkt nicht mit einer Elektrodenkreuzung überlappt, ist es bevorzugt, dass sich die wesentliche Flächenanteile des Teilbereiches der Struktur auf mindestens zwei Elektrodenkreuzungen aufteilen, sodass für die Elektrodenkreuzung keine hinreichende kapazitive Wechselwirkung vorliegt, um einen Touch-Event auszulösen. Beispielsweise kann es bevorzugt sein, dass in einer solchen Position, weniger als 20%, bevorzugt weniger als 10% der Fläche einer Elektrodenkreuzung von dem Teilbereich überdeckt werden.

Sobald ein Flächenschwerpunkt der Teilbereiche mit einer Elektrodenkreuzung überlappt, ist es hingegen bevorzugt, dass eine hinreichende Überdeckung der Elektrodenkreuzung mit elektrisch leitfähigem Material vorliegt, um eine kapazitive Wechselwirkung zu begründen, die ein Touch-Event auslöst.

Die mindestens zwei Teilbereiche mit den zwei Flächenschwerpunkten können bevorzugt im Abstand einer Zeile oder Spalte des Elektrodengitters (bzw. eines ganzzahligen Vielfachen davon) angeordnet vorliegen, wobei es besonders bevorzugt ist, dass sich die Flächenschwerpunkte in der vorgesehen Bewegungsrichtung der Vorrichtung auf unterschiedlicher Höhe befinden.

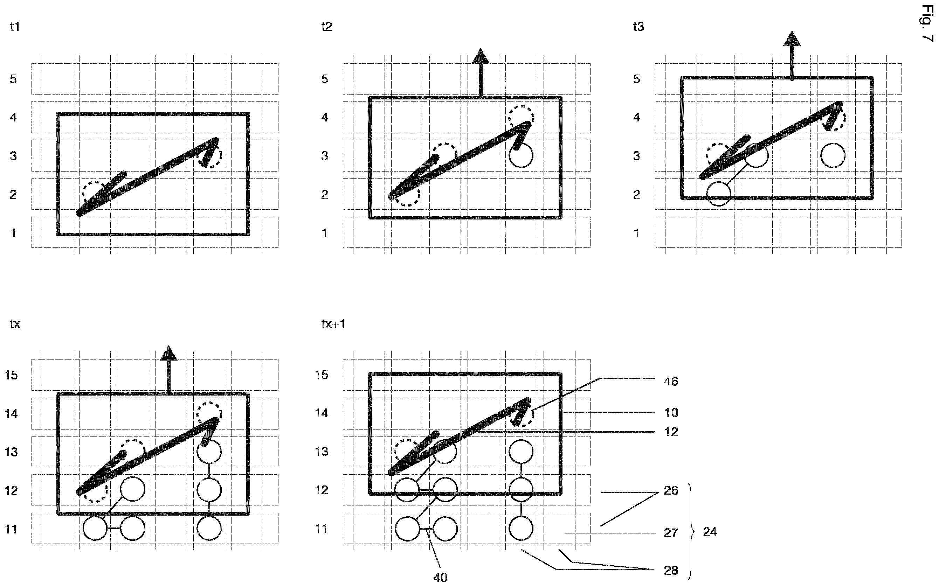

Fig. 7 zeigt beispielhaft eine elektrisch leitfähige Struktur mit einem linienförmigen Hauptelement und einem linienförmigen linken Teilelement, welches gegenüber dem Hauptelement gewinkelt angeordnet ist. Das Teilelement und Hauptelement in dem linken Bereich lässt sich gedanklich in Bezug auf das darunterliegenden Elektrodengitter in zwei Teilbereiche aufteilen, welche unterschiedliche Flächenschwerpunkte haben. Während einer Bewegung entlang der Richtung der Spalten, wird ein Touch-Event in einer linken oder rechten Spalte erzeugt, je nachdem, welcher Flächenschwerpunkt mit der Elektrodenkreuzung überlappt. Mit anderen Worten wird ein Touch-Event in einer linken oder rechten Spalte erzeugt, wenn die jeweilige Elektrodenkreuzung des darunterliegenden Elektrodengitters von einer Mindestfläche der elektrisch leitfähigen Struktur überdeckt bzw. überlappt wird. Diese relative Mindestfläche beträgt bevorzugt > 20% der Fläche einer Elektrodenkreuzung und besonders bevorzugt > 30% der Fläche einer Elektrodenkreuzung.

Erfindungsgemäß sind verschiedene elektrisch leitfähige Strukturen denkbar, welche zu abwechselnden Erzeugung von Touch-Events bei einer Relativbewegung entlang der Richtung einer Zeile oder Spalte führen.

Als besonders bevorzugt haben sich elektrisch leitfähige Strukturen mit einer linienförmigen Gestalt erwiesen. Bevorzugt werden die elektrisch leitfähigen Strukturen durch eine kontinuierliche Linie gebildet, wobei die Linie bevorzugt Winkel und/oder Kurven aufweisen kann.

Die linienförmige Gestalt weist hierbei bevorzugt eine Breite von 0,5 mm bis 8 mm, bevorzugt 1,5 mm bis 5 mm, besonders bevorzugt von 1,5 mm bis 3 mm auf.

Besonders bevorzugt umfasst die elektrisch leitfähige Struktur keine Teilbereiche, welche eine Ausdehnung von 8 mm x 8 mm oder mehr umfassen. Bei derartigen Teilbereichen, wie sie aus dem Stand der Technik bekannt sind, kann es aufgrund der Ausdehnung bevorzugt unabhängig von einer Überlappung eines Flächenschwerpunktes mit einer Elektrodenkreuzung stets zu einer Auslösung von Touch-Events kommen. Mit anderen Worten ist es bevorzugt, dass die elektrisch leitfähige Struktur so gestaltet ist, dass sie zu jedem Zeitpunkt der Bewegung der Vorrichtung über den kapazitiven Flächensensor keine der Elektrodenkreuzungen des darunterliegenden Elektrodengitters vollständig überdeckt bzw. überlappt. Die bevorzugte relative Maximalfläche beträgt < 70% der Fläche einer Elektrodenkreuzung und besonders bevorzugt < 50% der Fläche einer Elektrodenkreuzung.

Durch eine Linienform kann auf besonders effektive Weise eine Abhängigkeit der Erzeugung von Touch-Events von einer Relativposition zu den Elektrodenkreuzungen und somit eine beschriebene Generation eines oszillierenden Signals bewirkt werden.

Es ist im Sinne der Erfindung bevorzugt, die elektrisch leitfähige Struktur mindestens durch die Gestaltung eines Hauptelements zu charakterisieren. Es ist ferner bevorzugt, dass die elektrisch leitfähige Struktur zusätzlich durch die Gestaltung von mindestens einem Teilelement charakterisierbar ist. Im Sinne der Erfindung umfasst der Begriff Gestaltung ohne darauf beschränkt zu sein, Form, Größe, Geometrie, Länge, Breite, Ausrichtung, Lage und Winkel des Elements der elektrisch leitfähigen Struktur. Bevorzugte Gestaltungsvarianten umfassen beispielsweise linienförmige Haupt- und/oder Teilelemente, die durch Länge, Breite und Winkel charakterisiert sind. Es ist bevorzugt, dass die Teilelemente mit dem Hauptelement galvanisch verbunden sind und in ihrer Gesamtheit die elektrisch leitfähige Struktur bilden. Es ist insbesondere bevorzugt, dass die elektrisch leitfähige Struktur offen gestaltet ist, d.h. offene Enden aufweist oder in anderen Worten durch einen Anfang und ein Ende charakterisiert ist und/oder nicht zu einem Ring oder einer ähnlichen in sich geschlossenen Figur oder Geometrie verbunden ist.

In einer bevorzugte Ausführungsform umfasst die elektrisch leitfähige Struktur mindestens ein linienförmiges Hauptelement und mindestens ein linienförmiges Teilelement, wobei das Hauptelement und das Teilelement galvanisch miteinander verbunden sind und bevorzugt einen Winkel von 10° bis 80°, besonders bevorzugt 20° bis 60° einschlie-βen.

Das Hauptelement kann beispielsweise eine Länge von 20 mm bis 60 mm aufweisen, während das Teilelement eine Länge von 5 mm bis 20 mm aufweist. Bevorzugt handelt es sich bei Haupt- wie Teileelement um geradlinige Strukturen. Auch kann es bevorzugt sein, zwei Teilelemente an unterschiedlichen Enden des Hauptelementes zu positionieren.

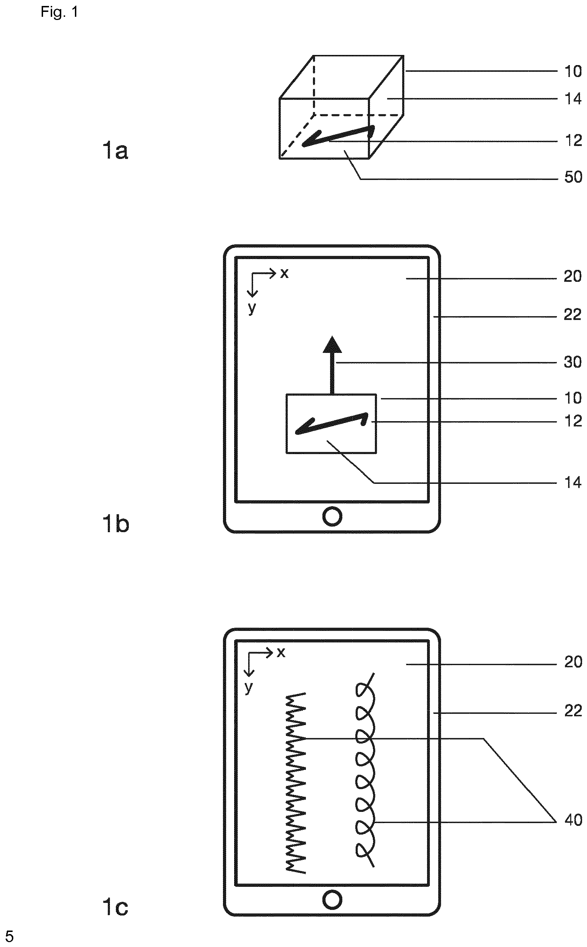

Wie die Beispiele (vgl. u.a. Fig. 1-8) zeigen, zeichnen sich elektrische Strukturen mit derart abgewinkelten Teilelemente in besonderem Maße aus, bei erfindungsgemäßer Bewegung der Vorrichtung über einen Flächensensor periodische Signale zu generieren.

In einer bevorzugten Ausführungsform der Erfindung weist die Kontaktfläche ein im Wesentlichen rechteckige Form auf, wobei das Hauptelement einen Winkel von 5° bis 45°, bevorzugt von 10° bis 35° zu einer der beiden Kanten der Kontaktfläche aufweist.

Eine derartige rechteckige Form liegt beispielsweise bei quaderförmigen Verpackungen oder einer flächigen rechteckigen Karte vor.

In der Regel wird ein Nutzer die Vorrichtung derart auf einen Flächensensor platzieren, dass die Kante des Rechteckes mit einer Kante eines, idR., rechteckigen Flächensensors ausgerichtet ist, wobei einer Bewegung bevorzugt entlang der Horizontalen oder Vertikalen des Flächensensors erfolgt. Die Ausrichtung des Winkels des Hauptelementes zur Kante der Kontaktfläche gibt mithin bevorzugt die Orientierung des Hauptelementes bei der Verwendung der Vorrichtung auf einem Flächensensor vor.

Durch die vorgenannten Winkel kann auf besonders effektive Weise eine Überbrückung zweier Elektrodenkreuzungen erfolgen, wobei zudem je nach Positionierung zweier Teilelemente in unterschiedlicher Höhe eine beschriebene Oszillation bewirkt und mithin ein periodisches Signal erzeugt wird.

Es ist im Sinne der Erfindung bevorzugt, dass dem periodischen Signal eine Periodenlänge als charakterisierende Größe des periodischen Signals zugeordnet werden kann, wobei die Periodenlänge vorzugsweise dem Kehrwert der Ortsfrequenz, mit der das periodische Signal schwankt, entspricht. Es ist im Sinne der Erfindung besonders bevorzugt, dass die Periodenlänge durch die Anordnung und/oder Gestaltung des Elektrodengitters des Flächensensors festgelegt wird. Es war besonders überraschend, dass die Ortsfrequenz des periodischen Signals mit der Gitterkonstante des Elektrodengitters des Flächensensors korreliert. Mit anderen Worten ist es im Sinne der Erfindung bevorzugt, dass die räumliche bzw. örtliche Periodizität des periodischen Signals von der Anordnung und/oder der Gestaltung des Elektrodengitters des Flächensensors festgelegt wird. Es ist im Sinne der Erfindung ganz besonders bevorzugt, dass die Periodenlänge des periodischen Signals durch die Geometrie des Elektrodengitters im kapazitiven Flächensensor festgelegt wird, wobei die die Anordnung und/oder Gestaltung des Elektrodengitters des Flächensensors vorzugsweise auch als "Geometrie des Elektrodengitters" bezeichnet wird. Überraschenderweise spiegelt die Periodenlänge des Signals die Anordnung der Elektroden im Elektrodengitter des Flächensensors wider.

Es ist im Sinne der Erfindung bevorzugt, dass die Periodenlänge des Signals zwischen 2 und 9 mm beträgt. Die Periodenlänge des Signals korreliert mit der Geometrie des Elektrodengitters, insbesondere mit der Gitterkonstante. Die Gitterkonstante in kapazitiven Flächensensoren liegt bevorzugt im Bereich zwischen 2 und 9 mm. Bevorzugt beträgt die Periodenlänge mindestens 3 mm und maximal 7 mm, da dieser Bereich überraschenderweise mit der Gitterkonstante kapazitiver Flächensensoren speziell von Mobiltelefonen, Smartphones, Tablets oder vergleichbaren Geräten korreliert. Es ist besonders bevorzugt, dass die Periodenlänge des Signals zwischen 4 und 5 mm liegt. Eine entsprechende Gitterkonstante in kapazitiven Flächensensoren ist insbesondere geeignet, Fingereingaben auf kapazitiven Flächensensoren zuverlässig zu detektieren. Viele Geräte, die einen kapazitiven Flächensensor beinhalten, weisen eine entsprechende Gitterkonstante auf. Es war besonders überraschend, dass die periodischen Signale eine Periodenlänge zwischen 4 und 5 mm aufweisen. Es ist den Erfindern überraschenderweise gelungen durch die Auswertung der Periodenlänge der periodischen Signale Rückschlüsse auf die Geometrie des Elektrodengitters zu gewinnen.

Es ist im Sinne der Erfindung bevorzugt, dass dem periodischen Signal ferner eine Periodendauer als charakterisierende Größe des periodischen Signals zugeordnet werden kann, wobei die Periodendauer vorzugsweise dem Kehrwert der Frequenz, mit der das periodische Signal schwankt, entspricht. Es ist im Sinne der Erfindung besonders bevorzugt, dass die Periodendauer, d.h. die zeitliche Periodizität des periodischen Signals von der Geometrie des Elektrodengitters des Flächensensors im Zusammenspiel mit der Geschwindigkeit der Relativbewegung, mit der die Vorrichtung über den Flächensensor bewegt wird, festgelegt wird. In diesem Zusammenhang kann die x- und/oder die y-Koordinate des periodisch verlaufenden Signals jeweils als Funktion der Zeit dargestellt werden, das heißt als Funktion der X-Koordinate x(t) und als Funktion der Y-Koordinate des periodischen Signals y(t). Es ist im Sinne der Erfindung insbesondere bevorzugt, dass das periodische Signal eine Periodendauer von mindestens 25 ms und besonders bevorzugt von mindestens 50 ms aufweist. Es ist ferner insbesondere bevorzugt, dass das periodische Signal eine Periodendauer von maximal 1 s und besonders bevorzugt von maximal 500 ms aufweist.

Es ist im Sinne der Erfindung ganz besonders bevorzugt, dass die Vorrichtung beziehungsweise das dreidimensionale Objekt von einer Verpackung oder einer Faltschachtel gebildet wird. Es ist ferner bevorzugt, dass das dreidimensionale Objekt verkürzend als "Objekt" bezeichnet wird. Vorzugsweise handelt es sich bei dem Objekt um ein quaderförmiges Gebilde, das eine Höhe, eine Breite und eine Länge aufweist.

In einer bevorzugten Ausführungsform weist das Objekt sechs Seitenflächen auf. Die Seitenfläche des Objekts, die dem Flächensensor zugewandt ist, wird vorzugsweise als Unterseite des Objekts bezeichnet. Die Fläche des Objekts, die dem Flächensensor zugewandt ist, wird alternativ auch als Kontaktfläche bezeichnet und muss nicht zwingend die Unterseite des Objektes bezogen auf den bestimmungsgemäßen Gebrauch des Objekts sein. Im Folgenden wird Unterseite und Kontaktfläche synonym verwendet und bezieht sich hier auf die Funktion dieser Fläche, dafür geeignet zu sein eine Wechselwirkung mit dem kapazitiven Flächensensor einzugehen.

Die Seitenfläche des Objekts, die der Unterseite gegenüber liegt, wird bevorzugt als Oberseite des Objekts bezeichnet. Die übrigen vier Flächen des Objekts werden vorzugsweise als Seitenflächen bezeichnet. Die Formulierung, dass die elektrisch leitfähige Struktur zumindest auf der Unterseite des dreidimensionalen Objekts angeordnet vorliegt, bedeutet im Sinne der Erfindung bevorzugt, dass die elektrisch leitfähige Struktur in jedem Fall auf der Unterseite des Objekts vorliegt und in einer bevorzugten Ausführungsform der Erfindung auch nur dort. Mit anderen Worten liegt die gesamte elektrisch leitfähige Struktur in dieser bevorzugten Ausführungsform der Erfindung auf der Unterseite bzw. Kontaktfläche der Vorrichtung vor. Es ist im Sinne der Erfindung insbesondere bevorzugt, dass die gesamte elektrisch leitfähige Struktur geeignet ist, mit dem Elektrodengitter des kapazitiven Flächensensors in Wechselwirkung zu stehen. Dies wird vorzugsweise dadurch erreicht, dass die elektrisch leitfähige Struktur im Wesentlichen vollständig auf der Unterseite des Objekts angeordnet vorliegt. Es kann in einer besonderen Ausführungsform auch bevorzugt sein, dass die elektrisch leitfähige Struktur auf der Innenseite der Unterseite des dreidimensionalen Objekts, beispielsweise einer Faltschachtel, angeordnet vorliegt. In einer weiteren bevorzugten Ausführungsform kann die elektrisch leitfähige Struktur durch eine Farbschicht und/oder eine Lackschicht und/oder durch ein Laminatmaterial optisch verdeckt werden, damit die elektrisch leitfähige Struktur für den Benutzer oder Anwender nicht sichtbar ist. Die Wechselwirkung zwischen elektrisch leitfähiger Struktur und kapazitivem Flächensensor ist bevorzugt eine kapazitive Wechselwirkung, d.h. es gibt keinen direkten galvanischen Kontakt zwischen der elektrisch leitfähigen Struktur und dem Flächensensor.

Die Form des Objekts ist nicht auf quader- oder würfelförmige Geometrien beschränkt. Auch andere Formen, beispielsweise Zylinder, Tetraeder oder sonstige Formen bzw. Körper stellen mögliche Ausführungsformen dar.

Es kann in anderen Ausführungsformen der Erfindung auch bevorzugt sein, dass einzelne Elemente oder Teilbereiche der elektrisch leitfähigen Struktur auch, d.h. zusätzlich auch, auf einer Seitenfläche oder mehreren Seitenflächen des Objekts vorliegen. In dieser Ausführungsform der Erfindung ist es bevorzugt, dass mindestens ein Teil der elektrisch leitfähigen Struktur geeignet ist, mit dem Elektrodengitter des kapazitiven Flächensensors in Wechselwirkung zu stehen. Beispielsweise kann in dieser Ausführungsform der Erfindung eine Berührfläche auf einer der Seitenflächen der Vorrichtung beziehungsweise des dreidimensionalen Objekts angeordnet sein. Eine Berührfläche ist im Sinne der Erfindung ein Teilelement der elektrisch leitfähigen Struktur, das so ausgebildet ist, dass es mit der elektrisch leitfähigen Struktur leitend verbunden ist, so dass durch Berührung der Berührfläche der elektrisch leitfähigen Struktur eine Potentialveränderung des Systems aus elektrisch leitfähiger Struktur und Flächensensor hervorgerufen wird, wobei diese Potentialveränderung vorzugsweise von dem Flächensensor detektiert werden kann. Der Begriff Anfassfläche wird synonym für Berührfläche verwendet.

In einer weiteren bevorzugten Ausführungsform ist die Breite und Länge des Objektes deutlich größer als die Höhe des Objektes. Ein solches Objekt kann beispielsweise als kartenförmiges Objekt beschrieben werden und zeichnet sich dadurch aus, dass es ein im Wesentlichen flaches Objekt darstellt. Es kann ferner bevorzugt sein, dass das flache Objekt flexibel und/oder biegsam ist. Die Seitenfläche des Objekts, die dem Flächensensor zugewandt ist, wird vorzugsweise als Unterseite des Objekts bezeichnet, während die Seitenfläche des Objekts, die der Unterseite gegenüber liegt, als Oberseite des Objekts bezeichnet wird. Die übrigen vier Seitenflächen werden vorzugsweise als Seitenflächen bezeichnet. Die Formulierung, dass die elektrisch leitfähige Struktur zumindest auf der Unterseite des dreidimensionalen Objekts angeordnet vorliegt, bedeutet im Sinne der Erfindung bevorzugt, dass die elektrisch leitfähige Struktur in jedem Fall auf der Unterseite des Objekts vorliegt und in einer bevorzugten Ausführungsform der Erfindung auch nur dort. Mit anderen Worten liegt die gesamte elektrisch leitfähige Struktur in dieser bevorzugten Ausführungsform der Erfindung auf der Unterseite der Vorrichtung vor. Es ist im Sinne der Erfindung insbesondere bevorzugt, dass die gesamte elektrisch leitfähige Struktur geeignet ist, mit dem Elektrodengitter des kapazitiven Flächensensors in Wechselwirkung zu stehen. Dies wird vorzugsweise dadurch erreicht, dass die elektrisch leitfähige Struktur im Wesentlichen vollständig auf der Unterseite des Objekts angeordnet vorliegt.

Flächensensoren umfassen insbesondere mindestens einen aktiven Schaltkreis, der vorzugsweise als Touch-Controller bezeichnet wird, welcher mit einer Struktur von Elektroden verbunden sein kann. Diese Elektrodenstruktur wird im Sinne der Erfindung vorzugsweise auch als "Elektrodengitter" bezeichnet. Es sind im Stand der Technik Flächensensoren bekannt, deren Elektroden Gruppen von Elektroden umfassen, die sich beispielsweise in ihrer Funktion voneinander unterscheiden. Dabei kann es sich zum Beispiel um Sende- und Empfangselektroden handeln, die in einer besonders bevorzugten Anordnung in Spalten- und Zeilenform angeordnet vorliegen können, das heißt insbesondere Knotenpunkte oder Kreuzungen bilden, an denen sich mindestens je eine Sende- und eine Empfangselektrode miteinander überkreuzen oder überlappen. Vorzugsweise sind die sich überkreuzenden Sende- und Empfangselektroden im Bereich der Knotenpunkte so zueinander ausgerichtet, dass sie miteinander im Wesentlichen einen 90°-Winkel einschließen.

Begriffe wie im Wesentlichen, ungefähr, etwa, ca. etc. beschreiben bevorzugt einen Toleranzbereich von weniger als ± 20%, bevorzugt weniger als ± 10 %, noch stärker bevorzugt weniger als ± 5% und insbesondere weniger als ± 1 %. Angaben von im Wesentlichen, ungefähr, etwa, ca. etc. offenbaren und umfassen stets auch den exakten genannten Wert.

Es ist im Sinne der Erfindung insbesondere bevorzugt, dass sich zwischen den Sende- und Empfangselektroden des Flächensensors ein elektrostatisches Feld ausbildet, das empfindlich auf Veränderungen reagiert. Diese Veränderungen können zum Beispiel durch das Berühren der Oberfläche des Flächensensors mit einem Finger oder einem leitfähigen Objekt, durch das Berühren einer Berühr- oder Anfassfläche einer elektrisch leitfähigen Struktur, die sich zumindest teilweise auf dem Flächensensor befindet, oder insbesondere durch das Inkontaktbringen des Flächensensors mit einer elektrisch leitfähigen Struktur, die beispielsweise auf der Unterseite einer Vorrichtung angeordnet ist, hervorgerufen werden. Insbesondere führen solche Veränderungen zu Potentialänderungen innerhalb des elektrostatischen Feld, die vorzugsweise dadurch bedingt wird, dass beispielsweise durch eine Berührung einer Berührfläche einer elektrisch leitfähigen Struktur das elektrische Feld zwischen Sende- und Empfangselektroden lokal verringert wird. Eine solche Veränderung der Potentialverhältnisse wird von der Elektronik des Touch-Controllers detektiert und weiterverarbeitet.

Es ist im Sinne der Erfindung bevorzugt, dass der Touch-Controller die Elektroden vorzugsweise so ansteuert, dass zwischen jeweils einer oder mehreren Sendeelektroden und einer oder mehreren Empfangselektroden ein Signal übertragen wird, bei dem es sich vorzugsweise um ein elektrisches Signal, beispielsweise eine Spannung, eine Stromstärke oder ein Potential(unterschied) handeln kann. Diese elektrischen Signale in einem kapazitiven Flächensensor werden vorzugsweise vom Touch-Controller ausgewertet und für das Betriebssystem des Gerätes aufbereitet. Die vom Touch-Controller an das Betriebssystem übermittelten Informationen beschreiben sogenannte einzelne "Touches" oder "Touch Events", die man sich jeweils als einzelne erkannte Berührungen vorstellen kann oder als einzelne Eingaben bezeichnen kann. Diese Touches sind bevorzugt durch die Parameter "x-Koordinate des Touches", "y-Koordinate des Touches", "Zeitstempel des Touches" und "Typ des Touches" gekennzeichnet. Die Parameter "x- und y-Koordinate" beschreiben die Position der Eingabe auf dem Touchscreen. Jedem Koordinatenpaar ist vorzugsweise ein Zeitstempel zugeordnet, der beschreibt, wann die Eingabe an der entsprechenden Stelle stattgefunden hat. Der Parameter "Typ des Touch-Events" beschreibt den detektierten Zustand der Eingabe auf dem Touchscreen. Dem Fachmann sind u.a. die Typen Touch Start, Touch Move, Touch End und Touch Cancel bekannt. Mit Hilfe der Parameter Touch Start, mindestens einem Touch Move und Touch End sowie den zugehörigen Koordinaten und Zeitstempeln kann eine Toucheingabe auf dem kapazitiven Flächensensor beschrieben werden. Es ist bevorzugt und im Stand der Technik als Multitouch-Technologie bekannt, dass mehrere Touch-Eingaben gleichzeitig ausgewertet werden können.

Das periodische Signal umfasst im Sinne der Erfindung vorzugsweise eine Menge an solchen Touches beziehungsweise Touch-Eingaben, wobei Eigenschaften des Signals vorzugsweise von der konkreten Gestalt der elektrisch leitfähigen Struktur abhängen, sowie von der strukturellen Anordnung der Sende- und Empfangselektroden des Flächensensors. Mit anderen Worten ist es im Sinne der Erfindung bevorzugt, dass das periodische Signal von einer Menge von Touches und/oder Touch-Eingaben gebildet wird, die in räumlicher und/oder zeitlicher Hinsicht wiederkehrende Eigenschaften und/oder eine Periodizität aufweisen. Es ist im Sinne der Erfindung insbesondere bevorzugt, dass der Verlauf des periodischen Signals von der elektrisch leitfähigen Struktur festlegt wird. Die projizierte-kapazitive Touchtechnologie (*projected capacitance touch technology*, PCT) ist eine beispielshafte Technologie, welche eine Multi-Touch-Bedienung erlaubt.

Bevorzugt wird die Menge an Touch Events bzw. Touches mit Hilfe eines Software-Programms (,app') verarbeitet und ausgewertet. Die Auswertung kann mehrere Schritte umfassen. Vorzugsweise werden zunächst die Geräteparameter des Gerätes, welchen die Flächensensor beinhaltet, z.B. die Auflösung des Touchscreens, bestimmt. In Abhängigkeit des Gerätes wird das Signal umfassend eine Menge an Touch Events im nächsten Schritt vorzugsweise vorgefiltert und spezifische Charakteristiken des Signals verstärkt oder angepasst. Anschließend wird das Signal auf Plausibilität geprüft indem Parameter wie zeitlicher Verlauf des Signals, Geschwindigkeit und Datendichte berechnet und auf etwaige Manipulation überprüft und mit bekannten Schwellwerten verglichen werden. Es ist bevorzugt, dass anschließend diverse Kennwerte und Parameter des Signals bestimmt bzw. berechnet werden umfassend die Kennwerte Start des Signals, Ende des Signals, lokale Maxima und Minima, lokale Geschwindigkeiten des Signals, Auslenkung, Amplituden, Periodenlänge von periodischen Signalen und ggf. weitere Merkmale um das Signal in einen vergleichbaren Datensatz zu überführen. Es ist insbesondere bevorzugt, anschließend diesen Datensatz mit anderen Datensätzen zu vergleichen und einem bekannten Datensatz, der beispielsweise in einer Datenbank liegt, zuzuordnen und somit das Signal zu dekodieren. In einer weiteren bevorzugten Ausführungsform findet der Abgleich des Datensatzes unter Nutzung eines zuvor aus Aufzeichnungen erstellten Machine Learning Models (*Artificial neural networks*) statt. Es war insbesondere überraschend, dass die Nutzung eines Machine Learning Models zur Dekodierung des Signals insbesondere für komplexe Signale mit vielen verschiedenen Parametern geeignet ist.

Die Dekodierung des Signals umfasst bevorzugt eine Zuordnung des detektierten periodischen Signals zu einer bekannten elektrisch leitfähigen Struktur bzw. einem dadurch repräsentierten Identifizierungscode. Vorteilhafterweise hat sich gezeigt, dass das durch die Relativbewegung der elektrischen Struktur auf dem Flächensensor erzeugte periodische Signal besonders manipulationssicher ist. Eine Nachahmung des komplexen periodischen Signals mit einer anderen elektrisch leitfähigen Struktur (also ohne Vorlage des Identifizierungscodes) ist nahezu unmöglich.

Die Vorrichtung bzw. das System ist daher in besonderem Maße für Authentifizierungsverfahren geeignet, um beispielsweise einem Nutzer bei Auflage der Vorrichtung auf einem mobilen Endgerät und erfindungsgemäßer Bewegung über den Flächensensor Zugang zu Informationen oder einer Aktion zu gewähren.

Der Begriff "kapazitiver Flächensensor" bezeichnet im Sinne der Erfindung bevorzugt solche touchsensoraufweisende Vorrichtungen, die in der Lage sind, äußere Einwirkungen oder Beeinflussungen, beispielsweise Kontakte, auf der Oberfläche des Touchsensors wahrzunehmen und mittels angegliederter Logik auszuwerten. Solche Flächensensoren werden beispielsweise benutzt, um Maschinen einfacher zu bedienen. Neben Touchsensoren, die vorrangig der Eingabe dienen, existieren Touchscreens, die gleichzeitig Anzeige- und/oder Ausgabegerät sind. Um eine Eingabe an einem kapazitiven Bildschirm, der vorzugsweise auch als Berührungsbildschirm, Touchscreen oder Flächensensor bezeichnet wird, vorzunehmen, können neben den Fingern auch spezielle Eingabestifte oder ähnliche Vorrichtungen genutzt werden. Im Sinne der Erfindung werden Finger sowie spezielle Eingabestifte bevorzugt unter dem Begriff Eingabemittel zusammengefasst. Diese sind vorzugsweise in der Lage, ein elektrostatisches Feld zwischen Zeilen- und Spaltenelektroden innerhalb des Flächensensors zu ändern. Der kapazitive, bevorzugt berührungsempfindliche Bildschirm ist vorzugsweise dafür eingerichtet, die Position des Fingers oder Eingabestiftes zu detektieren.

Üblicherweise werden Flächensensoren in einem elektronischen Gerät bereitgestellt, wobei es sich um Smartphones, Handys, Displays, Tablet-PCs, Tablet-Notebooks, Touchpad-Geräte, Grafiktabletts, Fernseher, PDAs, MP3-Player, Trackpads und/ oder kapazitive Eingabegeräte handeln kann, ohne darauf begrenzt zu sein.

Der Begriff "Gerät beinhaltend einen Flächensensor" oder "Gerät mit einem Flächensensor" bezieht sich bevorzugt auf elektronische Geräte, wie die vorgenannten, welche in der Lage sind, die vom kapazitiven Flächensensor bereitgestellten Informationen weiter auszuwerten. In bevorzugten Ausführungsformen handelt es sich um mobile Endgeräte.

Touchscreens werden vorzugsweise auch als Tastschirme, Flächensensoren oder Sensorbildschirme bezeichnet. Ein Flächensensor muss sich nicht zwingend in Zusammenhang mit einem Display oder einem Touchscreen verwendet werden. Es kann im Sinne der Erfindung ebenso bevorzugt sein, dass der Flächensensor sichtbar oder nicht-sichtbar in Geräten, Objekten und/oder Vorrichtungen integriert vorliegt.

Es war im Kontext der vorliegenden Erfindung vollkommen überraschend, dass mit der vorgeschlagenen Vorrichtung und dem vorgeschlagenen System auf die Verwendung eines solchen Eingabestiftes oder Fingers verzichtet werden kann, da die Änderung der Kopplung zwischen den Sende- und Empfangselektroden im Kontext der vorliegenden Erfindung von der elektrisch leitfähigen Struktur der Vorrichtung übernommen beziehungsweise bewirkt wird. Es war insbesondere vollkommen überraschend, dass die elektrisch leitfähige Struktur im Kontext der vorliegenden Erfindung nicht durch einen Nutzer durch Berührung eines Teilbereichs der Struktur aktiviert werden muss, sondern dass der Flächensensor die Vorrichtung beziehungsweise ihre elektrisch leitfähige Struktur auch so, d.h. ohne eine Berührung und/oder Aktivierung, erkennt. Insofern stellt die Erfindung eine wesentliche Abweichung vom bekannten Stand der Technik dar, da die Fachwelt bisher davon ausgegangen war, dass eine Aktivierung einer elektrisch leitfähigen Struktur, beispielsweise durch die Berührung eines Nutzers, erforderlich ist, um von dem kapazitiven Flächensensor erkannt zu werden. Mit der vorliegenden Erfindung wird nun eine Vorrichtung und ein System offenbart, bei denen auf ein Eingabemittel zur Erzeugung eines periodischen Signals überraschenderweise verzichtet werden kann.

Dass der Flächensensor in die Lage versetzt wird, die elektrisch leitfähige Struktur der Vorrichtung zu erkennen, ohne dass die Struktur durch eine Nutzerberührung aktiviert wird, beruht vorteilhafterweise auf einer Kopplung zwischen dem kapazitiven Flächensensor und der elektrisch leitfähigen Struktur, die insbesondere dann besteht, wenn die elektrisch leitfähige Struktur mit mindestens zwei Zeilen und mindestens zwei Spalten, beziehungsweise mindestens zwei Sendeelektroden und mindestens zwei Empfangselektroden, des Elektrodengitters des kapazitiven Flächensensors in Wechselwirkung steht. Es ist mit anderen Worten ganz besonders bevorzugt, dass die elektrisch leitfähige Struktur mit mindestens zwei Elektrodenkreuzungen überlappt. Es kann dann zu einem Ladungsträgeraustausch zwischen Flächensensor, beziehungsweise seinen Elektroden, und der elektrisch leitfähigen Struktur kommen. Es kann im Sinne der Erfindung auch bevorzugt sein, dass die elektrisch leitfähige Struktur auf dem dreidimensionalen Objekt bewirkt, dass die Elektroden des Elektrodengitters im Flächensensor indirekt über die elektrisch leitfähige Struktur miteinander wechselwirken. Es ist im Sinne der Erfindung ganz besonders bevorzugt, dass die elektrisch leitfähige Struktur dazu eingerichtet ist, einen Abstand zwischen den mindestens zwei Sende- und Empfangselektroden zu überbrücken. Vorzugsweise entsteht auf diese Weise eine kapazitive Verbindung zwischen mindestens zwei verschiedenen Elektrodenkreuzungen, die insbesondere von der elektrisch leitfähigen Struktur hergestellt und gehalten wird. Es ist im Sinne der Erfindung bevorzugt, dass die elektrisch leitfähige Struktur die Spalten und Zeilen des Elektrodengitters des Flächensensors miteinander verbindet, so dass hier eine Wechselwirkung zwischen den mindestens vier betroffenen Elektroden (zwei Sendeelektroden und zwei Empfangselektroden) hervorgerufen wird. Es ist im Sinne der Erfindung ganz besonders bevorzugt, dass die elektrisch leitfähige Struktur dazu eingerichtet ist, Überbrückungen und/oder Verbindungen von Elektrodenkreuzungen innerhalb des Elektrodengitters des Flächensensors zu bewirken. Die Verbindung und/oder Überbrückung der Elektrodenkreuzungen beruht vorzugsweise auf einer kapazitiven Wechselwirkung, die auch als kapazitive Kopplung bezeichnet wird. Mit anderen Worten beruht die Verbindung und/oder Überbrückung nicht auf einer galvanischen Verbindung, sondern auf einer kapazitiven Verbindung. Dies kann vorteilhafterweise zu einer selbstinduzierten Signalerzeugung führen, insbesondere zu einer Erzeugung des gewünschten periodischen Signals bei Bewegung der Vorrichtung über den kapazitiven Flächensensor.

In einer bevorzugten Ausführungsform umfasst die elektrisch leitfähige Struktur mindestens ein Hauptelement. In einer weiteren bevorzugten Ausführungsform umfasst die elektrisch leitfähige Struktur zusätzlich zum Hauptelement mindesten ein Teilelement. Hauptelement und ein oder mehrere Teilelemente galvanisch miteinander verbunden und bilden in ihrer Gesamtheit die elektrisch leitfähige Struktur. Die elektrisch leitfähige Struktur ist durch die Gestaltung des Hauptelements sowie die Gestaltung der Teilelemente charakterisierbar. Im Sinne der Erfindung umfasst der Begriff Gestaltung, ohne darauf beschränkt zu sein, Form, Größe, Geometrie, Länge, Breite, Ausrichtung, Lage und Winkel des Elements der elektrisch leitfähigen Struktur. Haupt- und/oder Teilelemente können beispielsweise linienförmig, kreisförmig oder bogenförmig sein ohne darauf beschränkt zu sein. In einem Ausführungsbeispiel kann der Übergang zwischen Teilelement und Hauptelement auch fließend bzw. bogenförmig sein. Es kann auch bevorzugt sein ein Teilelement mit einem weiteren Teilelement anstatt dem Teilelement galvanisch zu verbinden. Die Anzahl, Anordnung und Ausrichtung der Teilelemente ist nicht auf die beschriebenen Varianten beschränkt.

Als eine elektrisch leitfähige Struktur wird die Gesamtheit der miteinander galvanisch verbundenen Haupt- und Teilelemente bezeichnet. Es kann auch bevorzugt sein, dass sich zwei oder mehr elektrisch leitfähige Strukturen auf einer Kontaktfläche des Objekts befinden, die dadurch gekennzeichnet sind, dass sich nicht galvanisch miteinander verbunden sind.

Die elektrisch leitfähige Struktur steht in Wechselwirkung mit dem Elektrodengitter des kapazitiven Flächensensors. Dabei stehen insbesondere zu jedem Zeitpunkt der Interaktion verschiedene Elektrodenkreuzungen in Wechselwirkung mit der elektrisch leitfähigen Struktur bzw. einem oder mehreren Flächenschwerpunkten der elektrisch leitfähigen Struktur. Eine Elektrodenkreuzung steht insbesondere dann in Wechselwirkung mit der elektrisch leitfähigen Struktur, wenn die elektrisch leitfähige Struktur zu einem Zeitpunkt x ausgewählte Elektrodenkreuzungen überlappt. Insbesondere die Flächenschwerpunkte der elektrisch leitfähigen Struktur stehen in Wechselwirkung mit dem kapazitiven Flächensensor bzw. dem Elektrodengitter. An Stellen, an denen sich die Flächenschwerpunkte der elektrisch leitfähigen Struktur mit den Elektrodenkreuzungen überlagern, wird der kapazitive Flächensensor aktiviert oder in anderen Worten ein Touch-Event erzeugt.

Wird die Vorrichtung umfassend die elektrisch leitfähige Struktur über das Elektrodengitter des kapazitiven Flächensensors bewegt, steht die elektrisch leitfähige Struktur bzw. die Flächenschwerpunkte nach und nach mit anderen Elektrodenkreuzungen in Wechselwirkung. Dabei kommt es zu einer Überlagerung von zwei verschiedenen Geometrien: zum einen der Geometrie des Elektrodengitters und zum anderen der Geometrie der elektrisch leitfähigen Struktur. Werden diese beiden Geometrien gegeneinander verschoben, überlagern sich die beiden Geometrien. Diese Überlagerung wiederholt sich zyklisch bzw. periodisch. Dies führt zu periodisch angeordneten Touch-Events auf dem kapazitiven Flächensensor, die dann in ihrer Gesamtheit das periodische Signal bilden. Ähnliche Effekte sind dem Fachmann aus der Optik unter dem Begriff Interferenz bekannt. Es war völlig überraschend, dass eine elektrisch leitfähige Struktur eine derartige Wechselwirkung mit dem kapazitiven Flächensensor eingeht.

Es ist bevorzugt, dass die elektrisch leitfähige Struktur zu jeder Zeit der Bewegung mit mindestens zwei Zeilen und mindestens zwei Spalten in Wechselwirkung steht. Es ist insbesondere bevorzugt, dass die jeweils zwei Spalten und/oder jeweils zwei Zeilen nicht benachbart sind. Mit anderen Worten ist es bevorzugt, dass die elektrisch leitfähige Struktur zwei beabstandete Zeilen und/oder zwei beabstandete Spalten miteinander verbindet bzw. diese überbrückt.

Es ist im Sinne der Erfindung ganz besonders bevorzugt, dass diese Verbindung zwischen verschiedenen Elektrodenkreuzungen beziehungsweise den Sende- und Empfangselektroden des Elektrodengitters die Aktivierung der elektrisch leitfähigen Struktur durch die Berührung eines Nutzers obsolet macht, so dass im Kontext der vorliegenden Erfindung überraschenderweise auf die Verwendung eines Eingabemittels, wie beispielsweise den Finger eines Nutzers, verzichtet werden kann. Vorzugsweise beruhen die vorteilhaften Wirkungen und technischen Effekte der Erfindung auf der Wechselwirkung zwischen der elektrisch leitfähigen Struktur und dem Flächensensor, besonders bevorzugt zwischen der elektrisch leitfähigen Struktur und dem Elektrodengitter des Flächensensors und am meisten bevorzugt zwischen der elektrisch leitfähigen Struktur und den Spalten und Zeilen beziehungsweise den Sende- und Empfangselektroden des Elektrodengitters des Flächensensors. Diese Wechselwirkung führt im Sinne der Erfindung bevorzugt zu einer Änderung des elektrostatischen Feldes zwischen den Elektroden in einem Flächensensor und/oder zu einer messbaren Änderung der Kapazität. Die Änderung des elektrostatischen Feldes kann insbesondere durch eine Relativbewegung zwischen Flächensensor und dreidimensionalen Objekt bewirkt werden. Es ist im Sinne der Erfindung ganz besonders bevorzugt, dass das periodische Signal durch eine Relativbewegung zwischen der elektrisch leitfähigen Struktur und dem Flächensensor erzeugt wird. Diese Relativbewegung kann im Sinne der Erfindung vorzugsweise auch als dynamischer Wirkkontakt bezeichnet werden. Es ist im Sinne der Erfindung bevorzugt, dass die Dauer der Relativbewegung die Dauer des periodischen Signals festlegt.

Dauer bedeutet in diesem Zusammenhang insbesondere die Gesamtdauer des Signals. Es ist im Sinne der Erfindung insbesondere bevorzugt, dass das periodische Signal eine Dauer von mindestens 250 ms, bevorzugt von mindestens 500 ms und besonders bevorzugt von mindestens 750 ms aufweist.

Die vorliegende Erfindung wendet sich auch insofern vom Stand der Technik ab, als dass keine Touchstruktur auf der Vorrichtung mehr erforderlich ist, um ein Signal auf dem Flächensensor zu erzeugen. Eine Touchstruktur, wie sie aus dem Stand der Technik bekannt ist, setzte eine bestimmte räumliche Struktur von vordefinierten Elementen einer elektrisch leitfähigen Struktur voraus, nämlich insbesondere einen Touchpunkt, eine Koppelfläche und Leitungsmittel zur Verbindung. Das Vorhandensein dieser vordefinierten Elemente und ihrer Funktionalitäten ist im Kontext der vorliegenden Erfindung nicht erforderlich, ebenso wie die Notwendigkeit, mit der elektrisch leitfähigen Struktur die Eigenschaften von Fingerkuppen nachzubilden oder nachzuahmen. Insbesondere kommt die vorgeschlagene Vorrichtung ohne eine spezielle Koppelfläche aus, die von einem Nutzer berührt werden muss, um die elektrisch leitfähige Struktur für den Flächensensor zu aktivieren.

Üblicherweise werden Flächensensoren in einem elektrischen Gerät bereitgestellt, wobei es sich um Smartphones, Handys, Displays, Tablet-PCs, Tablet-Notebooks, Touchpad-Geräte, Grafiktabletts, Fernseher, PDAs, MP3-Player, Trackpads und/ oder kapazitive Eingabegeräte handeln kann, ohne darauf begrenzt zu sein. Touchscreens werden vorzugsweise auch als Tastschirme, Flächensensoren oder Sensorbildschirme bezeichnet. Ein Flächensensor muss sich nicht zwingend in Zusammenhang mit einem Display oder einem Touchscreen verwendet werden. Es kann im Sinne der Erfindung ebenso bevorzugt sein, dass der Flächensensor sichtbar oder nicht-sichtbar in Geräten, Objekten und/oder Vorrichtungen integriert vorliegt. Es kann im Sinne der Erfindung beispielsweise bevorzugt sein, multitouchfähige Flächensensoren zu verwenden. Solche Flächensensoren sind vorzugsweise dafür eingerichtet, mehrere Berührungen gleichzeitig zu erkennen, wodurch zum Beispiel Elemente, die auf einem Touchscreen angezeigt werden, mit Hilfe spezieller Gesten gedreht oder skaliert werden können.

Es ist im Sinne der Erfindung bevorzugt, dass die elektrisch leitfähige Struktur dazu eingerichtet ist, einen Verlauf des periodischen Signals hinsichtlich eines Kurvenverlaufs, einer Amplitude und/oder eines Flankenverlaufs festzulegen. Mit anderen Worten ist es im Sinne der Erfindung bevorzugt, dass die Gestaltung der elektrisch leitfähigen Struktur den Verlauf des periodischen Signals, insbesondere den Kurvenverlauf, die Amplituden und/oder den Flankenverlauf, festlegt.

Der Begriff "Kurvenverlauf" beschreibt im Sinne der Erfindung bevorzugt die graphische Darstellung beziehungsweise Widergabe der x(y)-Funktion im Koordinatensystem, das gedanklich über den Bildschirm des Flächensensors gelegt werden kann. Insbesondere beschreibt der Begriff den Verlauf der x(y)-Funktion in dem virtuellen Koordinatensystem. Der Begriff der "Amplitude" beschreibt bevorzugt die maximale Abweichung von einer festen Mittellage, um die herum das periodische Signale schwanken kann. Es ist im Sinne der Erfindung bevorzugt, dass die Amplitude des Signals mindestens 1 mm beträgt, damit die Amplitude des periodischen Signals bei der Auswertung der Menge an Touch-Signalen oder Touch-Events auswertbar ist. Die Amplitude beträgt bevorzugt mindestens 2 mm und besonders bevorzugt mindestens 3 mm. Es war besonders überraschend, dass somit mögliche Abweichungen oder Toleranzen, die durch die Relativbewegung zwischen der Vorrichtung und dem kapazitiven Flächensensor verursacht werden können, bei der Analyse des Signals vernachlässigt werden können und der Signal-Rausch-Abstand möglichst groß ist, d.h. das die Amplitude des periodischen Signals möglichst groß im Vergleich zu möglichen Abweichungen ist. Ferner ist es im Sinne der Erfindung bevorzugt, dass die Amplitude des periodischen Signals maximal 60 mm beträgt, da dies der ungefähren maximalen Breite heutiger kapazitiver Flächensensoren in Mobiltelefonen oder Smartphones entspricht. Besonders bevorzugt beträgt die Amplitude des periodischen Signals maximal 40 mm, da ein entsprechendes periodisches Signal besonders gut auswertbar ist. Überraschenderweise kann ein entsprechendes Signal besonders gut in Kombination mit einem weiteren periodischen Signal ausgewertet werden.

Der Begriff "Flankenverlauf" beschreibt bevorzugt den Verlauf des Signals genauer und umfasst, ohne darauf beschränkt zu sein, die Größen Anstieg, Abfall und Flankensteilheit.

Es ist im Sinne der Erfindung bevorzugt, dass die elektrisch leitfähige Struktur dazu eingerichtet ist, ein periodisches nicht-harmonisches Signal festzulegen. Nicht-harmonische Signale können bevorzugt aus einer Überlappung mehrerer harmonischer Signale dargestellt werden. In anderen Worten kann das Erscheinungsbild des Signals auch als Zappeln, Wackeln oder Zittern beschrieben werden.

In einer besonderen Ausführungsform ist es bevorzugt, dass das ortsabhängige Signal einen schlaufenförmigen Verlauf aufweist. In anderen Worten ist die elektrisch leitfähige Struktur dazu eingerichtet, dass sich die Koordinate des Signals, in dessen Richtung die Vorrichtung über den kapazitiven Flächensensor bewegt wird, periodisch vergrößert und verkleinert, d.h. das Signal verläuft teilweise rückwärts relativ zur Bewegungsrichtung der elektrisch leitfähigen Struktur. Der Verlauf auf dem kapazitiven Flächensensor ist als schlaufen- oder I-förmiger Verlauf (kleines Schreibschrift L) des Signals darstellbar.

Es ist im Sinne der Erfindung bevorzugt, dass die elektrisch leitfähige Struktur sowohl auf der Kontaktfläche, d.h. auf der Fläche der Vorrichtung, die für den Wirkkontakt mit dem Flächensensor vorgesehen ist, als auch auf mindestens einer weiteren Fläche der Vorrichtung vorliegt. Mit anderen Worten ist im Sinne der Erfindung bevorzugt, dass die elektrisch leitfähige Struktur sowohl auf der Unterseite, die als Kontaktfläche dient, als auch auf mindestens einer Seitenfläche der Vorrichtung vorliegt. Dieses Merkmal ist im Wesentlichen gleichbedeutend mit der Aussage, dass mindestens ein Teil der elektrisch leitfähigen Struktur geeignet ist mit dem Elektrodengitter des kapazitiven Flächensensors in Wechselwirkung zu stehen. Der Teil der elektrisch leitfähigen Struktur, der mit dem Flächensensor in Wechselwirkung steht, ist vorzugsweise der Teil der elektrisch leitfähigen Struktur, der auf der Kontaktfläche des dreidimensionalen Objekts angeordnet ist. Mindestens ein Teil der elektrisch leitfähigen Struktur liegt auf der Kontaktfläche des dreidimensionalen Objekts vor, während es in bevorzugten Ausführungsformen der Erfindung auch bevorzugt sein kann, dass neben den Teilen der elektrisch leitfähigen Struktur, die auf der Kontaktfläche der Vorrichtung vorliegen, weitere Teile der elektrisch leitfähigen Struktur auf den angrenzenden Flächen der Vorrichtung vorliegen. Es kann somit im Sinne der Erfindung bevorzugt sein, dass im Wesentlichen die gesamte elektrisch leitfähige Struktur auf der Kontaktfläche des dreidimensionalen Objekts vorliegt oder nur ein Anteil der elektrisch leitfähigen Struktur.

Wenn im Wesentlichen die gesamte elektrisch leitfähige Struktur auf der Kontaktfläche der Vorrichtung vorliegt, ist die entsprechende Vorrichtung besonders einfach herzustellen, da nur eine Seite des dreidimensionalen Objekts mit elektrisch leitfähigem Material bedruckt oder versehen werden muss. Dieses Merkmal ist im Wesentlichen gleichbedeutend mit der Aussage, dass die gesamte elektrisch leitfähige Struktur geeignet ist mit dem Elektrodengitter des kapazitiven Flächensensors in Wechselwirkung zu stehen. Darüber hinaus werden bei dieser Ausführungsform der Erfindung Schwierigkeiten vermieden, die sich beispielsweise daraus ergeben können, wenn ein Element der elektrisch leitfähigen Struktur auf zwei Seiten des Objekts vorliegt, in dem Sinne, dass dieses Element dann über eine Kante des Objekts verlaufen muss. Ein Nachteil im Stand der Technik ist die Notwendigkeit, dass die elektrische leitfähige Struktur über eine oder mehrere Kanten eines dreidimensionalen Objekts geführt werden muss. Dies kann zu Problemen führen, weil gerade die Kanten des Objekts größeren mechanischen Belastungen ausgesetzt sind als beispielsweise die Innenflächen der Seitenflächen oder der Unterseite des Objekts. Beispielsweise wirken im Herstellungsprozess einer Faltschachtel, insbesondere bei den Prozessen Rillen, Stanzen, Aufrichten, Kleben und Montieren starke mechanische Belastungen insbesondere im Bereich der Kanten der Faltschachtel. Dies kann zu einer Verringerung der elektrischen Leitfähigkeit oder sogar zum Bruch der elektrisch leitfähigen Struktur führen. Somit stellt die Anordnung der elektrisch leitfähigen Struktur ausschließlich auf einer Seite des Objekts einen entscheidenden Vorteil gegenüber den aus dem Stand der Technik bekannten Lösungen dar.

Es ist im Sinne der Erfindung bevorzugt, dass die elektrisch leitfähige Struktur dazu eingerichtet ist, mit mindestens zwei Zeilen und mindestens zwei Spalten eines Elektrodengitters des kapazitiven Flächensensors in Wechselwirkung zu stehen. Es ist im Sinne der Erfindung bevorzugt, dass die Zeilen des Elektrodengitters des Flächensensors im Wesentlichen von Sendeelektroden gebildet werden und die Spalten des Elektrodengitters des Flächensensors im Wesentlichen von Empfangselektroden gebildet werden, oder umgekehrt. Es ist im Sinne der Erfindung insbesondere bevorzugt, dass die Spalten des Elektrodengitters des Flächensensors sortenrein entweder nur Sendelektroden oder nur Empfangselektroden umfassen. Es ist ferner bevorzugt, dass auch die Zeilen des Elektrodengitters des Flächensensors sortenrein entweder nur von Sendelektroden oder nur von Empfangselektroden gebildet werden. Mit anderen Worten ist es somit im Sinne der Erfindung bevorzugt, dass die elektrisch leitfähige Struktur des dreidimensionalen Objekts dazu eingerichtet ist, mit mindestens zwei Empfangselektroden und mindestens zwei Sendelektroden des Elektrodengitters des kapazitiven Flächensensors in Wechselwirkung zu stehen. Es kann bevorzugt sein, dass es sich jeweils um zwei nebeneinanderliegende Sende- und Empfangselektroden handelt. In einer weiteren Ausführungsform kann es insbesondere auch bevorzugt sein, dass es sich um beabstandete Sende- und/oder Empfangselektroden handelt, d.h. dass sich zwischen den Elektroden, die in Wechselwirkung stehen, weitere Elektroden befinden. Vorzugsweise sind die bevorzugt nebeneinander angeordneten Sendeelektroden im Wesentlichen parallel zueinander angeordnet. Ebenso ist es bevorzugt, dass die bevorzugt nebeneinander angeordneten Empfangselektroden im Wesentlichen parallel zueinander angeordnet vorliegen. Es ist im Sinne der Erfindung bevorzugt, dass die Empfangselektroden des Elektrodengitters des Flächensensors im Wesentlichen senkrecht zu den Sendeelektroden des Elektrodengitters angeordnet sind, wobei der Begriff "im Wesentlichen" für den durchschnittlichen Fachmann nicht unklar ist, weil der durchschnittliche Fachmann weiß, wie der Begriff in der Praxis zu verstehen ist. Der Fachmann weiß insbesondere auch, dass beispielsweise herstellungsbedingt leichte Abweichungen zu einer exakten Parallelität oder Orthogonalität entstehen können. Solche Abweichungen sollen im Sinne der Erfindung aber auch von den Formulierungen "im Wesentlichen parallel" und "im Wesentlichen senkrecht" umfasst sein.

Vorzugsweise ergibt sich zwischen zwei bevorzugt nebeneinander liegenden Sende- und Empfangselektroden ein Muster ähnlich einem Karomuster. Es ist im Sinne der Erfindung ganz besonders bevorzugt, dass die elektrisch leitfähige Struktur mit mindestens zwei Zeilen und mindestens zwei Spalten, beziehungsweise mindestens zwei Sendeelektroden und mindestens zwei Empfangselektroden, des Elektrodengitters des kapazitiven Flächensensors in Wechselwirkung steht. Es hat sich überraschenderweise herausgestellt, dass der Verlauf des periodischen Signals durch die Wechselwirkung von Teilbereichen der elektrisch leitfähigen Struktur mit dem Elektrodengitter des kapazitiven Flächensensors festgelegt wird, wobei diese Festlegung des periodischen Signals insbesondere durch die Wechselwirkung zwischen der konkreten Ausgestaltung der elektrisch leitfähigen Struktur mit den mindestens zwei Sende- und Empfangselektroden erreicht wird.

In einem weiteren Aspekt betrifft die Erfindung ein System zur Erzeugung eines periodischen Signals auf einem kapazitiven Flächensensor, wobei das System eine Vorrichtung umfasst, sowie einen kapazitiven Flächensensor. Das System ist dadurch gekennzeichnet, dass das periodische Signal auf dem kapazitiven Flächensensor durch eine Relativbewegung zwischen der elektrisch leitfähigen Struktur und dem Flächensensor erzeugt wird. Mit anderen Worten ist es im Sinne der Erfindung bevorzugt, dass die elektrisch leitfähige Struktur auf der Vorrichtung dazu eingerichtet ist, in Wechselwirkung mit dem Elektrodengitter des kapazitiven Flächensensors den Verlauf des periodischen Signals festzulegen. Besonders bevorzugt ist die elektrisch leitfähige Struktur derart eingerichtet, dass bei einer Bewegung der Vorrichtung relativ zum Flächensensor entlang der Richtung einer Zeile oder einer Spalte des Elektrodengitters, ein periodisches Signal erzeugt wird, welches orthogonal zur Bewegung der Vorrichtung oszilliert.

Es war vollkommen überraschend, dass ein System zur Erzeugung eines periodischen Signals auf einem kapazitiven Flächensensor so bereitgestellt werden kann, dass dabei auf die Vorsehung beziehungsweise Verwendung eines speziellen Eingabemittels verzichtet werden kann. Insbesondere kommt die Erfindung in einer bevorzugten Ausführungsform überraschenderweise ohne eine menschliche Einkopplung aus. Das vorgeschlagene System umfasst eine Vorrichtung, bei der es sich vorzugsweise um ein dreidimensionales Objekt handelt, und einen kapazitiven Flächensensor, der im Sinne der Erfindung vorzugsweise verkürzend als "Flächensensor" bezeichnet wird. Vorzugsweise wird insbesondere der Verlauf des periodischen Signals von der Ausgestaltung der elektrisch leitfähigen Struktur auf der Vorrichtung festgelegt, während die Periodenlänge des periodischen Signals von der Ausgestaltung des Flächensensors, insbesondere seines Elektrodengitters aus Sende- und Empfangselektroden, festgelegt wird. Es ist im Sinne der Erfindung mit anderen Worten ganz besonders bevorzugt, dass die Periodenlänge des periodischen Signals durch die Geometrie des Elektrodengitters im kapazitiven Flächensensor festgelegt wird. Vorzugsweise kann die Anordnung und/oder Gestaltung des Elektrodengitters des Flächensensors vorzugsweise auch als "Geometrie des Elektrodengitters" bezeichnet werden. Es ist im Sinne der Erfindung bevorzugt, dass die Dauer der Interaktion zwischen elektrisch leitfähiger Struktur und Flächensensor die Zeitdauer des periodischen Signals bestimmt. Zeitdauer des periodischen Signals bedeutet in diesem Zusammenhang insbesondere die Gesamtdauer des periodischen Signals. Es ist im Sinne der Erfindung insbesondere bevorzugt, dass das periodische Signal eine Dauer von mindestens 250 ms aufweist, da eine Mindestdauer des periodischen Signals erforderlich ist damit die Kennwerte des Signals entsprechend auswertbar sind. Die Dauer des periodischen Signals beträgt besonders bevorzugt mindestens 500 ms, da somit eine größere Anzahl an Touchdaten bzw. Touch-Events zur Auswertung zur Verfügung steht und Mittelwerte über die Kennzahlen, beispielsweise die Amplitude des Signals, gebildet werden können. Für eine besonders sichere und genaue Auswertung des Signals weist das periodische Signal eine besonders bevorzugte Mindestdauer von mindestens 750 ms auf.

Damit wird durch das vorgeschlagene System die Möglichkeit bereitgestellt, ein periodisches Signal auf einem Flächensensor zu generieren, indem eine Vorrichtung, insbesondere ein dreidimensionales Objekt, über den Flächensensor bewegt wird. Insbesondere die bewusste und gewollte Erzeugung von periodischen Signalen durch eine spezifische Ausgestaltung beziehungsweise Design einer elektrisch leitfähigen Struktur auf einer Vorrichtung beziehungsweise durch eine spezifische Ausgestaltung beziehungsweise Geometrie des Elektrodengitters eines Flächensensors ist im Stand der Technik bisher nicht beschrieben. Es war vollkommen überraschend, dass durch die konkrete Ausgestaltung beziehungsweise Einflussnahme und/oder Veränderung auf die strukturelle Ausgestaltung der elektrisch leitfähigen Struktur und/oder des Elektrodengitters die Eigenschaften des zu erzeugenden periodischen Signals bewusst beeinflusst, variiert und/oder verändert werden können. Bei den auf diese Weise einstellbaren Eigenschaften des periodischen Signals handelt es sich vorzugsweise um die räumlichen und/oder zeitlichen Eigenschaften des periodischen Signals, beispielsweise seine Amplitude oder Periodenlänge oder Periodendauer. Es war vollkommen überraschend, dass die räumlichen und/oder zeitlichen Eigenschaften eines periodischen Signals durch die Bereitstellung eines Systems umfassend eine Vorrichtung mit einer elektrisch leitfähigen Struktur und einen Flächensensor beeinflusst werden können. Es war vollkommen überraschend, dass mit der Erfindung ein besonders intuitiv bedienbares und benutzerfreundliches interaktives System bereitgestellt werden kann, mit dessen Hilfe ein Objekt beziehungsweise sein Nutzer durch einen kapazitiven Flächensensor besonders sicher und eindeutig verifiziert und/oder identifiziert werden kann. Die vorgeschlagene Vorrichtung und das vorgeschlagene System sind besonders sicher gegenüber Manipulationen und die entsprechende elektrisch leitfähige Struktur kann insbesondere nicht von Fingerkuppen nachgemacht oder durch einen Nutzer manipuliert werden.

Der Begriff "Identifikation" bedeutet im Sinne der Erfindung bevorzugt, dass eine Vorrichtung beziehungsweise ein Objekt durch den Flächensensor erkannt wird und beispielsweise einem im elektrischen Gerät, welches den Flächensensor beinhaltet, hinterlegten Datensatz zugeordnet werden kann. Dabei kann der Datensatz beispielsweise auch nicht im elektrischen Gerät direkt hinterlegt sein, aber für diesen zugänglich sein, indem er beispielsweise auf einem Server, im Internet und/oder in einer Cloud abrufbar ist. Die Erkennung des Objekts durch den Flächensensor erfolgt insbesondere durch die Erkennung der elektrisch leitfähigen Struktur, die auf dem Objekt angeordnet ist. Diese elektrisch leitfähige Struktur wird insbesondere durch die Gestaltung der gesamten elektrisch leitfähigen Struktur und/oder deren Teilbereiche bestimmt.

Der Begriff "Verifikation" bedeutet im Sinne der Erfindung bevorzugt, dass die Authentizität oder die Echtheit eines Objektes ermittelt oder nachgewiesen werden kann. Im Stand der Technik sind beispielsweise Hologramme seit langem bekannt. Jedoch ist es häufig nur Fachleuten möglich, die Echtheit eines Hologramms zu überprüfen oder nachzuweisen. Es war vollkommen überraschend, dass mit der vorliegenden Erfindung eine zweifelsfreie Verifikation des Merkmals in Form der elektrisch leitfähigen Struktur mit Hilfe eines Gerätes, welchen einen Flächensensor beinhaltet, beispielsweise einem Smartphone, erfolgen kann. Einsatzbereiche für eine solche Anwendung liegen im Bereich von Produkt- und Dokumentenschutz.

In einer weiteren bevorzugten Ausführungsform ist es bevorzugt, dass die elektrisch leitfähige Struktur auf einem Objekt als Zugangsschlüssel zu digitalen Inhalten dient. Mit anderen Worten ist es bevorzugt, dass das elektrisch leitfähige Merkmal als Schlüssel für die Freischaltung von digitalen Inhalten, beispielsweise Garantiezertifikate, Gutscheine, Coupons, digitale Medien u.a. dient.

Es ist im Sinne der Erfindung vorgesehen, dass das periodische Signal auf dem kapazitiven Flächensensor durch eine Relativbewegung zwischen der elektrisch leitfähigen Struktur und dem Flächensensor erzeugt wird. Die Vorrichtung beziehungsweise das Objekt ist vorzugsweise zur Erzeugung eines solchen periodischen Signals auf einem kapazitiven Flächensensor eingerichtet, wobei das periodische Signal insbesondere durch eine Relativbewegung zwischen der elektrisch leitfähigen Struktur und dem Flächensensor erzeugt wird. Das bedeutet mit anderen Worten bevorzugt, dass die Vorrichtung und der Flächensensor gegeneinander verschoben werden, so dass eine Bewegung der beiden Objekte relativ zu einander hervorgerufen wird. Dies kann beispielsweise dadurch erfolgen, dass das Objekt auf dem Bildschirm eines Flächensensors verschoben oder über ihn bewegt wird. Dabei liegt die Vorrichtung beziehungsweise ihre Kontaktfläche vorzugsweise auf dem Bildschirm des Flächensensors auf. Es ist im Sinne der Erfindung ganz besonders bevorzugt, dass die Vorrichtung über den Flächensensor gezogen wird, um eine Relativbewegung, mit der das periodische Signal auf dem Flächensensor erzeugt wird, zu erhalten. Vorzugsweise wird diese Zug- oder Schubbewegung als Relativbewegung bezeichnet.

Es ist im Sinne der Erfindung bevorzugt, dass die Dauer der Relativbewegung die Dauer des periodischen Signals festlegt. Dauer bedeutet in diesem Zusammenhang insbesondere die Gesamtdauer des Signals. Es ist im Sinne der Erfindung insbesondere bevorzugt, dass das periodische Signal eine Dauer von mindestens 250 ms, bevorzugt von mindestens 500 ms und besonders bevorzugt von mindestens 750 ms aufweist.

Das erfindungsgemäße System ist bevorzugt dafür eingerichtet die beschriebene Erzeugung eines periodischen Signals zu detektieren und auszuwerten, um die aufgelegte elektrische Struktur zu identifizieren bzw. zu verifizieren.

In einer bevorzugten Ausführungsform weist das System eine Datenverarbeitungsvorrichtung auf, welche dazu eingerichtet ist, das periodische Signal auszuwerten, wobei auf der Datenverarbeitungsvorrichtung bevorzugt eine Software (,app') installiert vorliegt, welche Befehle umfasst, dynamische Kennwerte des periodischen Signals zu bestimmen und mit Referenzdaten zu vergleichen.

In einer bevorzugten Ausführungsform weist das den Flächensensor beinhaltende Gerät eine Datenverarbeitungsvorrichtung auf, welche dazu eingerichtet ist, das periodische Signal auszuwerten, wobei auf der Datenverarbeitungsvorrichtung bevorzugt eine Software (,app') installiert vorliegt, welche Befehle umfasst, dynamische Kennwerte des periodischen Signals zu bestimmen und mit Referenzdaten zu vergleichen.

In einer weiteren bevorzugten Ausführungsform wird die Software zumindest teilweise in Form eines Cloud-Services bzw. Internet-Dienstes bereitgestellt, wobei das Gerät die Touchdaten bzw. Touch-Events über das Internet an eine Applikation in der Cloud übermittelt. Auch in diesem Fall liegt eine Software (,app') auf einer Datenverarbeitungsvorrichtung vor, welche Befehle umfasst, dynamische Kennwerte des periodischen Signals zu bestimmen und mit Referenzdaten zu vergleichen. Die auf der Datenverarbeitungsvorrichtung des Gerätes installierte Software führt jedoch nicht alle rechenintensive Schritte selbstständig auf dem Gerät durch. Stattdessen werden die Daten über das periodische Signal bzw. die Menge der Touch-Events an eine Software-Applikation in einer Cloud (mit einer externen Datenverarbeitungsvorrichtung) zur Bestimmung dynamischer Kennwerte und deren Vergleich mit Referenzdaten übermittelt.

Die Software als Cloud-Dienst, welche bevorzugt Befehle umfasst dynamische Kennwerte des periodischen Signals zu bestimmen und mit Referenzdaten zu vergleichen, verarbeitet das periodische Signal in Form einer Menge an Touch-Events und sendet das Ergebnis zurück an das den Flächensensor umfassenden Gerät bzw. an die auf diesem installierte Software. Die Software auf dem Gerät kann bevorzugt die Ergebnisse weiterverarbeiten und beispielsweise deren Anzeige steuern.

Wenn im Folgenden bevorzugte Merkmale der Software beschrieben werden, erkennt der Fachmann, dass diese bevorzugt gleichermaßen für eine Software gelten, welche die Schritte vollständig auf dem Gerät durchführt, als auch für eine Software, welche einige (bevorzugt rechenintensive) Schritte, wie die Bestimmung dynamischer Kennwerte und deren Vergleich mit Referenzdaten, auf eine externe Datenverarbeitungsvorrichtung eines Cloud-Service ausgelagert hat. Ein Fachmann erkennt, dass die vorgesehene Auswertung des periodischen Signals als einheitliches Konzept zu verstehen ist, unabhängig davon, welche Schritte des Algorithmus auf dem Gerät selbst oder durch eine externe Datenverarbeitungsvorrichtung auf einer Cloud durchgeführt werden. In bevorzugten Ausführungsformen kann beispielsweise auch eine Bestimmung der dynamischen Kennwerte des periodischen Signals durch die Software auf dem Gerät erfolgen und nur der Vergleich der dynamischen Kennwerte mit Referenzdaten ausgelagert durch einen Cloud-Dienst erfolgen.

Bei dem Flächensensor beinhaltenden Gerät handelt es sich bevorzugt um ein elektronisches Gerät, welches in der Lage ist die vom kapazitiven Flächensensor bereitgestellten Informationen weiter auszuwerten. Der kapazitive Flächensensor bzw. das Gerät weist bevorzugt einen aktiven Schaltkreis, auch Touch-Controller genannt, auf, welcher wie obig beschrieben eine Auswertung von Berührungssignalen auf dem Flächensensor erlaubt. Mittels des Touch-Controller und einem auf dem elektronischen Gerät bereitgestellten Betriebssystem wird das periodische Signal bevorzugt als eine Menge von Touch-Events aufbereitet.

Ein Touch-Event bezeichnet vorzugsweise ein Softwareereignis, das vom Betriebssystem des Gerätes mit dem kapazitiven Flächensensor bereitgestellt wird, wenn sich ein vom Touch-Controller detektierter elektronischer Parameter ändert.

Ein Betriebssystem bezieht sich vorzugsweise auf die Software, die mit der Hardware des Geräts, insbesondere dem kapazitiven Flächensensor bzw. dem Touch-Controller, kommuniziert und es anderen Programmen, wie beispielsweise der Software (,app') ermöglicht, auf dem Gerät zu laufen. Beispiele für Betriebssysteme für Geräte mit kapazitivem Oberflächensensor sind Apples iOS für iPhone, iPad und iPod Touch oder Android für den Betrieb verschiedener Smartphones, Tablet-Computer oder Media-Player. Betriebssysteme steuern und überwachen die Hardware des Gerätes, insbesondere den kapazitiven Flächensensor oder einen Touch-Controller. Vorzugsweise stellen Betriebssysteme für das beanspruchte System eine Menge von Touch-Events zur Verfügung, welche das periodische Signal reflektieren.

Bei Führen der Vorrichtung über den Flächensensor kann beispielsweise an unterschiedlichen Positionen ein Touch-Start, ein Touch-Move und Touch-End erkannt werden, wobei anhand der x bzw. y Koordinaten und der Zeitstempel der Touches der zeitliche Ablauf nachvollzogen werden kann.

Bevorzugt bewirkt die Relativbewegung der Vorrichtung eine abwechselnde Erzeugung von Touch-Events, welche wie beschrieben, die Periodizität des Elektrodengitters reflektiert.

Die Aufbereitung des periodischen Signals erfolgt bevorzugt durch das Betriebssystem bzw. den Touch-Controller des elektronischen Gerätes, wie beispielsweise eines Smartphones.

Die auf der Datenverarbeitungsvorrichtung installierte Software (,app') wertet das periodische Signal bevorzugt anhand der detektierten Menge an Touch-Events aus.

Die Datenverarbeitungsvorrichtung ist bevorzugt eine Einheit, welche zum Empfang, Senden, Speichern und/oder Verarbeiten von Daten, bevorzugt Touch-Events geeignet und konfiguriert ist. Die Datenverarbeitungseinheit umfasst bevorzugt einen integrierten Schaltkreis, einen Prozessor, einen Prozessorchip, einen Mikroprozessor und/oder Mikrokontroller zur Verarbeitung von Daten, sowie einen Datenspeicher, beispielsweise eine Festplatte, einen *random access memory* (RAM), einen *read-only memory* (ROM) oder auch einen *flash memory* zur Speicherung der Daten. In kommerziell erhältlichen elektronischen Geräten mit Flächensensoren, wie beispielsweise den mobilen Endgeräten oder smart devices, liegen entsprechende Datenverarbeitungsvorrichtungen vor.

Die Software (,app') kann in jeder Programmiersprache oder modellbasierten Entwicklungsumgebung geschrieben werden, wie beispielsweise C/C++, C#, Objective-C, Java, Basic/VisualBasic oder Kotlin. Der Computercode kann Unterprogramme umfassen, die in einer proprietären Computersprache geschrieben sind, die spezifisch für das Auslesen oder die Steuerung oder einer anderen Hardwarekomponente des Gerätes vorgesehen sind.

Insbesondere bestimmt die Software bevorzugt dynamische Kennwerte des periodischen Signals (bevorzugt in Form einer Menge von Touch-Events), um diese Referenzdaten zu vergleichen. Dynamische Kennwerte des periodischen Signals sind beispielsweise die Periodenlänge, der Kurvenverlauf, die Amplitude und/oder der Flankenverlauf.

Bei den dynamischen Kennwerten kann es sich beispielsweise um Start, Ende, lokale Maxima, lokale Minima, lokale Geschwindigkeiten, Auslenkung und/oder Amplituden von Touch-Events oder einer Menge von Touch-Events handeln.

Die Gesamtheit der dynamischen Kennwerte, welche das periodische Signal kennzeichnen, können bevorzugt in einem Datensatz zusammengefasst werden, welcher mit einem Referenzdatensatz verglichen werden kann, um die aufgelegt elektrische Struktur zu identifizieren oder verifizieren. In einer bevorzugten Ausführungsform findet der Abgleich des Datensatzes unter Nutzung eines zuvor aus Aufzeichnungen oder Kalibrationsdaten erstellten Machine Learning Models (*Artificial neural networks*) statt. Beispielsweise können zu diesem Zweck Referenzdaten erzeugt werden, in dem die Vorrichtung mit einer bekannten elektrischen Struktur auf einem Flächensensor aufgelegt wird und in Richtung einer Zeile oder Spalte des Flächensensors bewegt wird.

Der Begriff Referenzdaten umfasst bevorzugt Schwellwerte oder Referenzdatensätze. Der Begriff Referenzdaten bezieht sich bevorzugt auf alle Daten, welche eine Zuordnung eines detektierten periodischen Signals zu einem Identifizierungscode bzw. einer bekannten elektrischen Struktur erlauben.

Bevorzugt können die Referenzdaten auf einem computerverwendbaren oder computerlesbaren Medium auf der Datenverarbeitungseinheit gespeichert vorliegen. Jedes Dateiformat kann geeignet sein, welches in der Industrie verwendet wird. Die Referenzdaten können in einer separaten Datei gespeichert und/oder in der Software (z.B. im Quellcode) integriert vorliegen.

Aufgrund der Komplexität des periodischen Signals ist eine derartige Zuordnung bzw. Identifikationen besonders sicher und vor Manipulation geschützt.

Die im Stand der Technik bekannten Identifikationsverfahren basieren insbesondere auf einer Erkennung von statischen Signalen einer elektrischen Struktur, beispielsweise einer Touch-Struktur, welche eine Berührung von Fingerspitzen nachahmt. Bei hinreichendem Geschick ist es mit den bekannten Verfahren bzw. Systemen prinzipiell möglich derartige Touch-Strukturen mit den Fingern nachzubilden.

Eine Nachbildung eines erfindungsgemäß erzeugten periodischen Signals ist ohne Bereitstellung einer identischen elektrischen Struktur nicht möglich. Selbst wenn es gelänge zu einem Zeitpunkt durch geschicktes Aufsetzen von Fingern oder anderen kapazitiven Strukturen die Erzeugung initialer Touch-Events nachzubilden, wäre ist es nicht möglich die Finger so zuführen, dass ein periodisches Signal erzeugbar ist.

Vielmehr würden die Finger bei bleibendem Kontakt als ein Touch-Move erkannt werden und deren Signale nicht in Korrelation mit der Periodizität des Elektrodengitters hin- und her oszillieren.

Anhand der Bestimmung dynamischer Kennwerte kann die Software zudem eine Reihe von Plausibilitätsüberprüfungen durchführen, um eine Manipulation des Signals auszuzuschließen.

Beispielweise kann es bevorzugt sein, dass die Software den zeitlichen Verlauf des periodischen Signals auswertet und mit Referenzdaten vergleicht, um die Wahrscheinlichkeit abzuschätzen, dass eine Führung einer Struktur mittels des Eingabesignals zum detektierten zeitlichen Verlauf der dynamischen Signale führt.

In besonders bevorzugten Ausführungsformen kann die Software hierzu dynamische Kennwerte des periodischen Signals, wie dessen Periodenlänge, Amplitude und/oder Periodendauer auswerten und mit Referenzdaten vergleichen. Wie obig, erläutert sind die Periodenlänge, Amplitude und/oder Periodendauer besonders geeignete Parameter, um das periodische Signale und diesem zugrunde liegende elektrische Struktur zur kennzeichnen. Als ein Plausibilätskriterium sollte die Periodenlänge beispielsweise bevorzugt mit den Gitterkonstanten des Elektrodengitters korrelieren.

Die Bestimmung der dynamischen Kennwerte des periodischen Signals und der Vergleich mit Schwellwerten und/oder Referenzdatensätzen, erlaubt somit bevorzugt sowohl eine Überprüfung der Plausibilität des Signals, als auch dessen Zuordnung zu Referenzdaten zu Identifizierungszwecken. Die Auswertung mittels der Software kann auf verschiedene Weise umgesetzt werden und mehrere Schritte umfassen. Vorzugsweise können zunächst die Geräteparameter des Gerätes, welchen die Flächensensor beinhaltet, z.B. die Auflösung des Flächensensors bzw. Touchscreens, bestimmt werden.

Hierdurch wird das periodische Signal umfassend eine Menge an Touch Events vorzugsweise vorgefiltert und spezifische Charakteristiken des Signals verstärkt oder angepasst. Vorteilhafterweise ist die Software somit nicht auf einen bestimmten Gerätetypen beschränkt, sondern kann optimale Ergebnisse für unterschiedliche elektronische Geräte liefern.

Nach einer Filterung des periodischen Signals kann das Signal auf Plausibilität geprüft werden, indem Parameter wie ein zeitlicher Verlauf des Signals, Geschwindigkeit und Datendichte berechnet werden. Anhand eines Vergleiches mit bekannten bzw. kalibrierten Schwellwerten können somit etwaige Manipulation sicher ausgeschlossen werden.

Besonders bevorzugt werden im Anschluss eine Reihe diverse Kennwerte und Parameter der Signale bestimmt bzw. berechnet. Hierzu können u.a. die Kennwerte Start des Signals, Ende des Signals, lokale Maxima und Minima, lokale Geschwindigkeiten des Signals, Auslenkung, Amplituden, Periodenlänge von periodischen Signalen bestimmt werden und ggf. mit weiteren Merkmalen um das periodische Signal in einen Datensatz überführt werden. Die dynamischen Kennwerte sollten insbesondere geeignet sein, die Oszillation der erzeugten periodisch erzeugten Touch-Events zu charakterisieren. Anschließend kann der erhaltene Datensatz mit einem Referenzdatensatz, der beispielsweise in einer Datenbank liegt, verglichen werden, um das periodische Signal zu dekodieren, wobei bevorzugt ein Machine Learning Algorithmus zum Einsatz kommen kann. Dekodieren meint bevorzugt eine Zuordnung des periodischen Signals zu einer bekannten Identifizierungscode bzw. einer bekannten elektrische leitfähigen Struktur.

In einem weiteren Aspekt betrifft die Erfindung zudem einen Kit zur Erzeugung und Auswertung eines periodischen Signals auf einem kapazitiven Flächensensor mit einem Elektrodengitter umfassend Zeilen und Spalten umfassend
a. eine Vorrichtung, welche ein dreidimensionales Objekt ist, wobei das dreidimensionale Objekt eine Kontaktfläche aufweist, wobei eine elektrisch leitfähige Struktur zumindest auf der Kontaktfläche des dreidimensionalen Objekts angeordnet vorliegt und wobei die elektrisch leitfähige Struktur derart eingerichtet ist, dass bei einer Bewegung der Vorrichtung relativ zum Flächensensor entlang der Richtung einer Zeile oder einer Spalte des Elektrodengitters, ein periodisches Signal erzeugt wird, welches orthogonal zur Bewegung der Vorrichtung oszilliert
b. eine Software (,app') zur Installation auf einem Gerät umfassend den Flächensensor, welche Befehle umfasst, dynamische Kennwerte des periodischen Signals zu bestimmen und mit Referenzdaten zu vergleichen.

Optional kann der Kit zudem Instruktionen umfassen zur Bewegung der Vorrichtung relativ zum Flächensensor entlang der Richtung einer Zeile oder Spalte, sodass ein periodisches Signal erzeugt wird, welches orthogonal zur Bewegung der Vorrichtung oszilliert.

In einem weiteren Aspekt betrifft die Erfindung die Verwendung der vorgeschlagenen Vorrichtung zur Erzeugung eines periodischen Signals auf einem kapazitiven Flächensensor mit einem Elektrodengitter umfassend Zeilen und Spalten, wobei die elektrisch leitfähige Struktur der Vorrichtung in Wirkkontakt mit dem kapazitiven Flächensensor gebracht wird und die Vorrichtung entlang einer Zeile oder Spalte des Elektrodengitters relativ zum kapazitiven Flächensensor bewegt wird.

In einem weiteren Aspekt betrifft die Erfindung ein Verfahren zur Erzeugung eines periodischen Signals auf einem Flächensensor umfassend die folgenden Schritte:
a) Bereitstellen eines beschriebenen Systems umfassend eine Vorrichtung mit einer elektrisch leitfähigen Struktur sowie einem kapazitiven Flächensensor mit einem Elektrodengitter umfassend Zeilen und Spalten,
b) Bewegen der Vorrichtung relativ zum kapazitiven Flächensensor n entlang einer Zeile oder Spalte des Elektrodengitters, während die elektrisch leitfähige Struktur im Wirkkontakt mit dem Flächensensor steht.

Der Fachmann erkennt, dass bevorzugte Ausführungsformen und Vorteile, welche im Zusammenhang mit der beschriebenen Vorrichtung, des Systems, des Kits oder deren Verwendung offenbart wurden sich gleichermaßen auf die anderen beanspruchte Kategorien wie das die Vorrichtung, das System, den Kit oder deren Verwendung übertragen. So werden beispielsweise in bevorzugten Ausführungsformen des Systems oder des Kits bevorzugte Ausführungsformen der Vorrichtung verwendet und führen zu den gleichen Vorteilen.

Es ist im Sinne der Erfindung bevorzugt, dass die elektrisch leitfähige Struktur mittels Folientransferverfahren, zum Beispiel Kaltfolientransfer, Heißprägen und/oder Thermotransfer auf ein Substratmaterial aufgebracht werden, ohne auf diese Aufbringungsverfahren beschränkt zu sein. Insbesondere können zur Herstellung der elektrisch leitfähigen Struktur auf dem nicht-leitfähigen Substrat Druckverfahren, wie zum Beispiel Offsetdruck, Tiefdruck, Flexodruck, Siebdruck und/oder Inkjetmethoden verwendet werden ohne darauf beschränkt zu sein. Geeignete elektrisch leitfähige Farben umfassen Materialien, die beispielsweise auf Metallpartikeln, Nanopartikeln, Kohlenstoff, Graphen und/oder elektrisch leitfähigen Polymeren basieren, ohne auf diese Materialien beschränkt zu sein. Es kann im Sinne der Erfindung auch bevorzugt sein, die elektrisch leitfähige Struktur durch mindestens eine weitere Schicht abzudecken, wobei diese Schicht ein papier- oder folienbasiertes Laminatmaterial oder mindestens eine Lack-/Farbschicht sein kann. Diese Schicht kann optisch transparent oder opak ausgebildet sein. Es kann im Sinne der Erfindung ferner bevorzugt sein, dass die elektrisch leitfähige Struktur auf der Innenseite einer Seitenfläche des Objekts appliziert wird, beispielsweise auf der Innenseite der Kontaktfläche bzw. Unterseite einer Faltschachtel.

Ein Merkmal klassischer konventioneller Druckverfahren ist die einfache und schnelle Vervielfältigung eines Motivs, indem das zu druckende Motiv auf eine Druckform, zum Beispiel einen Tiefdruckzylinder oder eine Offsetdruckplatte, aufgebracht wird und anschließend mehrfach und mit hoher Geschwindigkeit vervielfältigt werden kann. Konventionelle Druckverfahren sind nicht dafür geeignet, individualisierte Inhalte herzustellen, da die Druckformherstellung einen signifikanten Anteil an den Gesamtherstellungskosten darstellt. Somit können nur größere Auflagen eines Druckprodukts wirtschaftlich hergestellt werden. Im grafischen Druck existieren für die Herstellung kleiner Auflagen sowie individualisierter Produkte Digitaldruckverfahren, mit denen individuelle Inhalte wirtschaftlich gedruckt werden können. Diese Druckverfahren umfassen beispielsweise Elektrofotografie, Laserdruck oder Inkjetdruck. Es ist zudem möglich, mittels Verfahrenskombinationen von konventionellen Druckverfahren und additiven oder subtraktiven Verfahren individualisierte elektrische leitfähige Strukturen herzustellen.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Die Erfindung wird anhand der nachfolgenden Figuren näher beschrieben:
Figur 1 a-c zeigt eine Vorrichtung (10) zur Erzeugung eines periodischen Signals (40) auf einem kapazitiven Flächensensor (20), wobei die Vorrichtung (10) eine elektrisch leitfähige Struktur (12) umfasst, die auf einem nicht-leitfähigen Substrat (14) angeordnet vorliegt. Die Vorrichtung (10) in der dargestellten Ausführungsform ist ein dreidimensionales Objekt ist, wobei das dreidimensionale Objekt eine Kontaktfläche (50) aufweist, wobei die elektrisch leitfähige Struktur (12) auf der Kontaktfläche bzw. Unterseite (50) des dreidimensionalen Objekts angeordnet vorliegt und den Verlauf des periodischen Signals (40) festlegt.
Figur 1b zeigt die Vorrichtung (10) umfassend eine elektrisch leitfähige Struktur (12) auf einem elektrisch nicht-leitfähigen Substrat (14), die in einer Relativbewegung (30) über den kapazitiven Flächensensor (20) bewegt wird. Im vorliegenden Beispiel wird die Vorrichtung (10) in y-Richtung über den kapazitiven Flächensensor (20) bewegt. Zur besseren Übersichtlichkeit ist die Vorrichtung (10) bzw. die Unterseite (50) des Objekts (10) in der Draufsicht dargestellt. Der kapazitive Flächensensor (20) ist Teil eines elektronischen Gerätes (22), beispielsweise eines Smartphones oder Tablets. Der kapazitive Flächensensor (20) ist in diesem Fall ein Touchscreen, der über x- und y-Koordinaten charakterisiert werden kann.
Figur 1c zeigt das periodische Signal (40) auf dem kapazitiven Flächensensor (20). Im Ausführungsbeispiel wird jeweils durch den linken und rechten Teilbereich der elektrisch leitfähigen Struktur (12) ein periodisches Signal (40) erzeugt. Die periodischen Signale (40) sind nicht-harmonische Signale, die entsprechend der Bewegungsrichtung der Vorrichtung (10) in Richtung der y-Achse verlaufen. Das rechte der beiden ortsabhängigen Signale weist einen schlaufenförmigen Verlauf auf. In anderen Worten ist die elektrisch leitfähige Struktur (12) dazu eingerichtet, dass sich die y-Koordinate des Signals (40), in dessen Richtung die Vorrichtung (10) über den kapazitiven Flächensensor (20) bewegt wird, periodisch vergrößert und verkleinert, obwohl die Vorrichtung (10) stetig in eine Richtung über den kapazitiven Flächensensor (20) bewegt wird, d.h. das periodische Signal (40) wird in periodischen bzw. zyklischen Abständen "zurück und wieder vorwärts geführt".

Im Sinne einer deutlichen Darstellung sind die periodischen Signale (40) derart dargestellt, als wären sie über den Zeitraum der Relativbewegung (30) der Vorrichtung (10) auf dem kapazitiven Flächensensor (20) aufgezeichnet worden, d.h. die Touch-Eingaben auf dem kapazitiven Flächensensor (20) wurden erkannt, erfasst und auf dem Touchscreen dargestellt. Im Folgenden wird dieses auf dem Touchscreen dargestellte Signal als "aufgezeichnetes periodisches Signal" (40) bezeichnet. Für den Fachmann ist es nachvollziehbar, dass das Signal (40) während der Relativbewegung (30) der Vorrichtung (10) über den kapazitiven Flächensensor (20) nach und nach entsteht. Sobald die Vorrichtung (10) über einen Bereich des Flächensensors (20) hinwegbewegt wurde, ist an dieser Stelle kein Signal (40) mehr detektierbar, d.h. der Touchscreen ist an dieser Stelle nicht mehr "aktiviert".

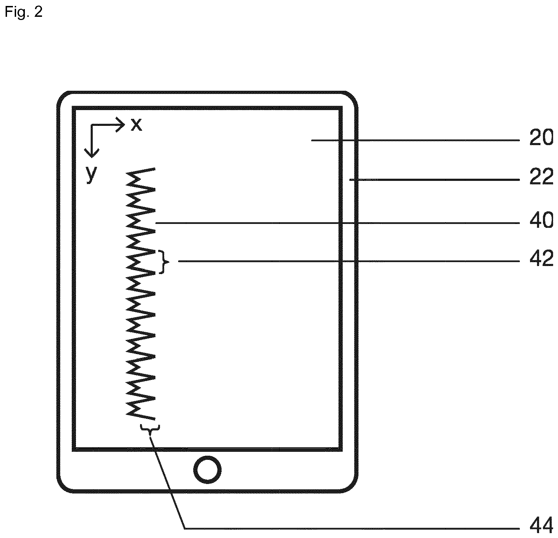

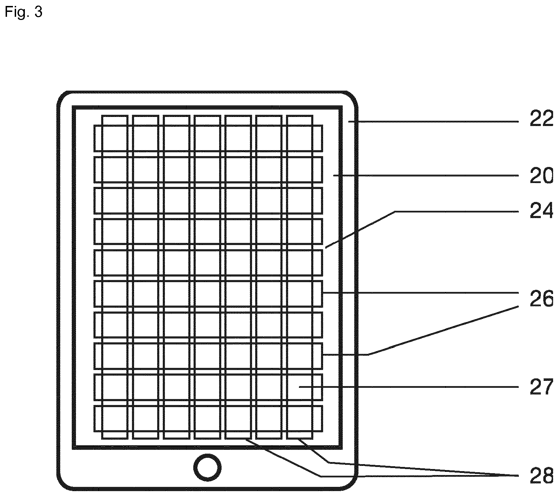

Figur 2 zeigt das aufgezeichnete periodische Signal (40) auf dem kapazitiven Flächensensor (20), welcher Bestandteil eines elektronischen Geräts (22) ist. Das periodische Signal (40) ist gekennzeichnet durch die Periodenlänge (42) sowie die Amplitude (44). Die Periodenlänge (42) ist bei dem sich regelmäßig wiederholenden Signal (40) das kleinste örtliche Intervall, nach dem sich der Vorgang wiederholt. Die Amplitude (44) ist die maximale Auslenkung des periodischen Signals (40) aus der Lage des arithmetischen Mittelwerts des Signals. Figur 3 zeigt das elektronische Gerät (22), welches den kapazitiven Flächensensor (20) beinhaltet. Der Flächensensor (20) weist ein Elektrodengitter (24) auf, welches Zeilen (26) und Spalten (28) umfasst. An jeder Stelle, an der sich eine Zeile (26) und eine Spalte (28) des Elektrodengitters (24) überlappt, liegt eine Elektrodenkreuzung (27), die an einer Stelle in der Zeichnung zur Verdeutlichung schraffiert dargestellt ist. Zeilen (26) und Spalten (28) repräsentieren i.d.R. Sende- und Empfangselektroden des kapazitiven Flächensensors (20).

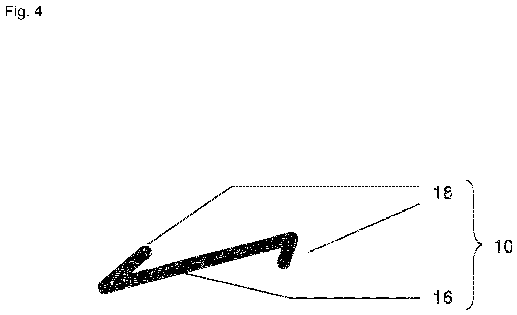

Figur 4 zeigt eine bevorzugte Ausführungsform der elektrisch leitfähigen Struktur (12). Die elektrisch leitfähige Struktur (12) ist durch die Gestaltung des Hauptelements (16) sowie die Gestaltung der Teilelemente (18) charakterisierbar. Im Sinne der Erfindung umfasst der Begriff Gestaltung ohne darauf beschränkt zu sein, Form, Größe, Geometrie, Länge, Breite, Ausrichtung, Lage und Winkel der Elemente der elektrisch leitfähigen Struktur (12). Im vorliegenden Ausführungsbeispiel weist das Hauptelement (16) beispielsweise eine linienförmige Gestalt mit einer Länge von 45 mm und einer Breite von 2 mm auf. Das Hauptelement (16) liegt im Winkel von 20° auf der Vorrichtung (nicht dargestellt) vor. Das linke Teilelement (18) ist ebenso linienförmig gestaltet, weist eine Länge von 13 mm und eine Breite von 2 mm auf und liegt in einem Winkel von 40° vor. Das rechte Teilelement (18) ist ebenso linienförmig gestaltet, weist eine Länge von 6 mm und eine Breite von 2 mm auf und liegt in einem Winkel von 70° vor. Beide Teilelemente (18) sind mit dem Hauptelement (16) galvanisch verbunden und bilden gemeinsam mit dem Hauptelement (16) in ihrer Gesamtheit die elektrisch leitfähige Struktur (12).

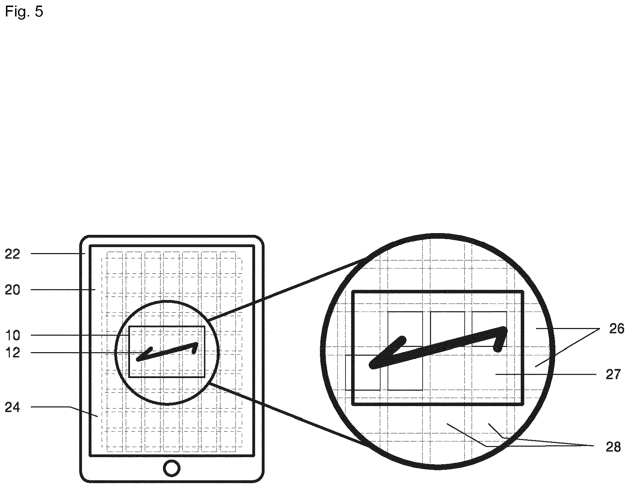

Figur 5 links zeigt die Vorrichtung (10) umfassend eine elektrisch leitfähige Struktur (12) auf dem kapazitiven Flächensensor (20). Die elektrisch leitfähige Struktur (12) steht in Wechselwirkung mit dem Elektrodengitter (24) des kapazitiven Flächensensors (20). Auf der rechten Seite der Abbildung ist eine Ausschnittsvergrößerung dargestellt, bei der die Elektrodenkreuzungen (27) schraffiert dargestellt sind, welche mit der elektrisch leitfähigen Struktur (12) in Wechselwirkung stehen. Wird die Vorrichtung (10) umfassend die elektrisch leitfähige Struktur (12) über das Elektrodengitter (24) des kapazitiven Flächensensors (20) bewegt, steht die elektrisch leitfähige Struktur (12) nach und nach mit anderen Elektrodenkreuzungen (27) in Wechselwirkung. Es ist bevorzugt, dass die elektrisch leitfähige Struktur (12) zu jeder Zeit der Bewegung (30) mit mindestens zwei Zeilen (26) und mindestens zwei Spalten (28) in Wechselwirkung steht.

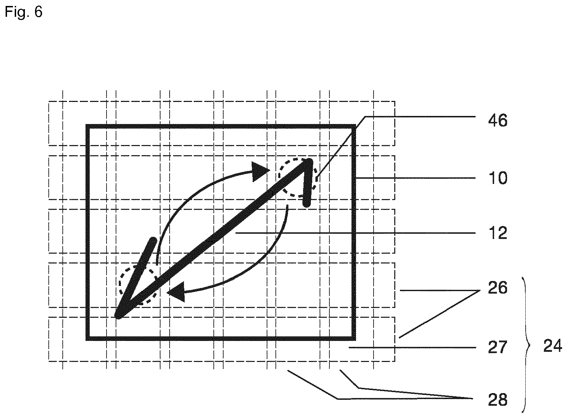

Figur 6 zeigt eine bevorzugte Ausführungsform der elektrisch leitfähigen Struktur (12), angeordnet auf dem Elektrodengitter (24) des kapazitiven Flächensensors (nur als Ausschnitt dargestellt). Die von der elektrisch leitfähigen Struktur (12) erzeugten Touch-Events (46) sind an den entsprechenden Elektrodenkreuzungen (27) durch gestrichelte Kreise dargestellt. Die elektrisch leitfähige Struktur (12) überbrückt im vorliegenden Ausführungsbeispiel einen Abstand zwischen zwei Elektrodenkreuzungen (27). Durch das Platzieren der elektrisch leitfähigen Struktur (12) auf dem Elektrodengitter (24) entsteht vorzugsweise eine kapazitive Verbindung zwischen mindestens zwei verschiedenen Elektrodenkreuzungen, die insbesondere von der elektrisch leitfähigen Struktur (12) hergestellt und gehalten wird. Die elektrisch leitfähige Struktur (12) steht in kapazitiver Wechselwirkung mit dem Elektrodengitter (24). Es ist im Sinne der Erfindung bevorzugt, dass die elektrisch leitfähige Struktur (12) die Spalten (28) und Zeilen (26) des Elektrodengitters (24) des Flächensensors (20) miteinander verbindet, so dass hier eine Wechselwirkung zwischen den mindestens vier betroffenen Elektroden (zwei Sendeelektroden und zwei Empfangselektroden) hervorgerufen wird. Die Wechselwirkung zwischen den Elektroden ist durch Pfeile dargestellt.

Figur 7 zeigt verschiedene Zustände beim Bewegen der Vorrichtung (10) umfassend die elektrisch leitfähige Struktur (12) über den kapazitiven Flächensensor (20) bzw. das Elektrodengitter (24). Zur besseren Nachvollziehbarkeit sind die Zeilen (26) des Elektrodengitters (24) nummeriert. Es sind insgesamt 5 Zustände dargestellt t1, t2, t3, ..., tx und tx+1. Auf den Einzelgrafiken t2, t3 und tx deutet der Pfeil die Bewegung der Vorrichtung (10) bzw. der elektrisch leitfähigen Struktur (12) relativ zum Elektrodengitter (24) an. Auf den jeweiligen Einzelgrafiken sind die zu dem jeweiligen Zeitpunkt erzeugten Touch-Events (46) durch gestrichelte Kreise dargestellt. Die zu einem vorherigen Zeitpunkt erzeugten Touch-Events sind mit einfachen Kreisen dargestellt. Die Kreise wurden zur Verdeutlichung des zeitlichen Ablaufs durch Linien miteinander verbunden. Die Gesamtheit der Touch-Events (46), die über den Zeitverlauf t1 bis tx+1 erzeugt wurden ergeben das aufgezeichnete periodische Signal (40). Je nach Überlappung der elektrisch leitfähigen Struktur (12) entstehen die Touch-Events (46) an bestimmten Elektrodenkreuzungen (24). Ein Touch-Event (46) wird dann erzeugt, wenn die jeweilige Elektrodenkreuzung (27) des darunterliegenden Elektrodengitters (24) von einer Mindestfläche der elektrisch leitfähigen Struktur (12) überdeckt bzw. überlappt wird. Diese Mindestfläche beträgt bevorzugt > 20% der Fläche einer Elektrodenkreuzung und besonders bevorzugt > 30% der Fläche einer Elektrodenkreuzung. Durch die Überlagerung der elektrisch leitfähigen Struktur mit dem Elektrodengitter entsteht der in diesem Beispiel ein zickzackförmiger Verlauf des linken Teils des periodischen Signals (40). Die Periodenlänge des Signals entspricht in diesem Fall der Gitterkonstante des Elektrodengitters (24).

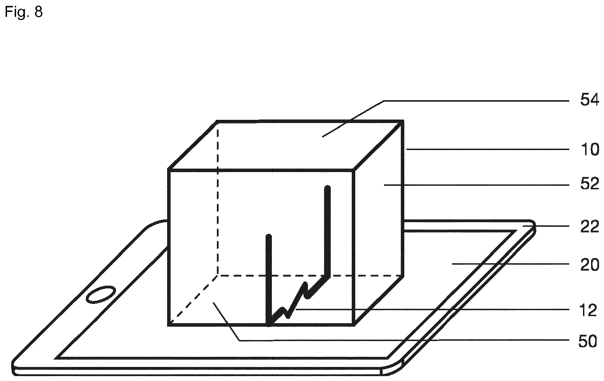

Figur 8 zeigt die Vorrichtung (10) in Form eines dreidimensionalen Objekts auf einem kapazitiven Flächensensor (20), der Bestandteil eines elektronischen Geräts (22) ist. Die Vorrichtung (10) umfasst eine elektrisch leitfähige Struktur (12), die auf der Unterseite bzw. Kontaktseite (50) und auf zwei Seitenflächen (52) des Objekts angeordnet vorliegt. Dieser Teilbereich der elektrisch leitfähigen Struktur (12) kann als Berührfläche oder Anfassfläche bezeichnet werden.

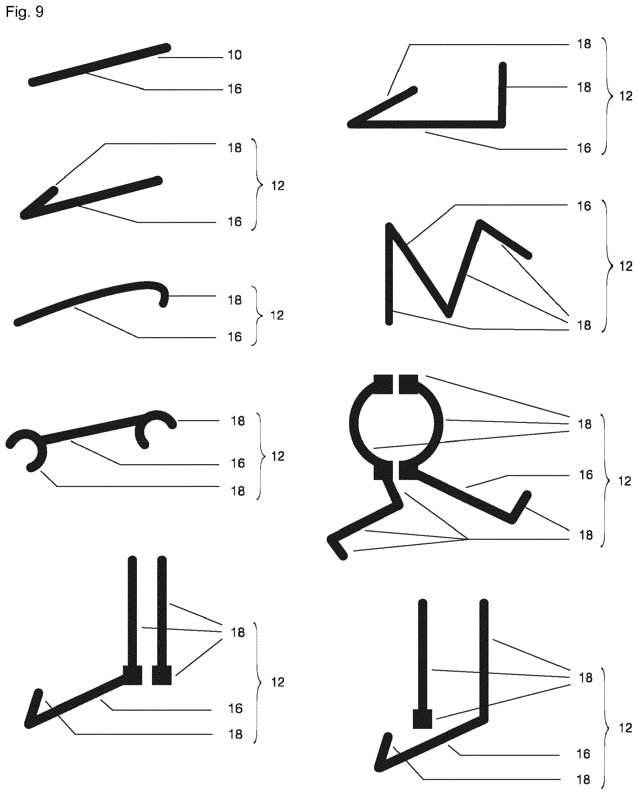

Figur 9 zeigt weitere Ausführungsformen der elektrisch leitfähigen Struktur (12), die sich insbesondere hinsichtlich der Gestaltung des Hauptelements (16) und der Teilelemente (18) unterscheiden. So kann es beispielsweise einen fließenden Übergang zwischen Hauptelement (16) und Teilelement (18) geben, wie im Beispiel Mitte links dargestellt. Weiterhin kann es bevorzugt sein, ein Teilelement (18) nicht direkt an das Hauptelement (16), sondern an ein weiteres Teilelement (18) anzuhängen, wie im Beispiel Mitte rechts dargestellt. Die Hauptelemente (16) und/oder Teilelemente (18) können eine bogenförmige Gestalt aufweisen. In weiteren bevorzugten Ausführungsformen (in der Grafik unten dargestellt) kann die elektrisch leitfähige Struktur (12) aus zwei voneinander getrennten Bereichen bestehen. Die dadurch erzeugten periodischen Signale (40) auf dem kapazitiven Flächensensor (20) sind entsprechend komplexer. Die Anzahl, Anordnung und Ausrichtung der Hauptelemente (16) und Teilelemente (18) sind nicht auf die dargestellten Varianten beschränkt.

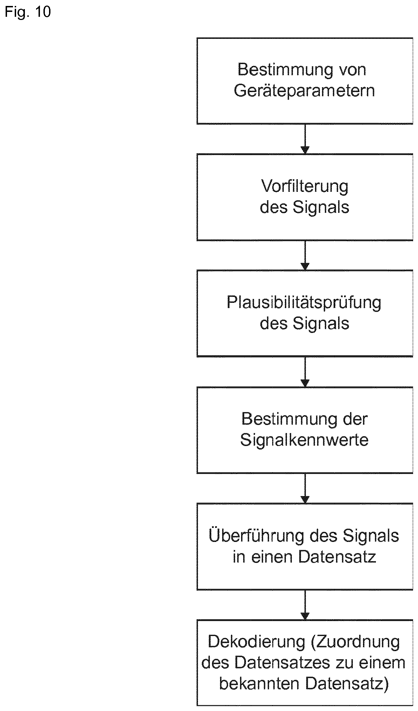

In Figur 10 sind die Schritte der Verarbeitung und Auswertung der Touch-Events bzw. Touches mit Hilfe eines Software-Programms dargestellt. Vorzugsweise werden zunächst die Geräteparameter des Gerätes, welchen den Flächensensor beinhaltet, z.B. die Auflösung des Touchscreens, bestimmt. In Abhängigkeit des Gerätes wird das Signal umfassend eine Menge an Touch Events im nächsten Schritt vorzugsweise vorgefiltert und spezifische Charakteristiken des Signals verstärkt oder angepasst. Anschließend wird das Signal auf Plausibilität geprüft indem Parameter wie zeitlicher Verlauf des Signals, Geschwindigkeit und Datendichte berechnet und auf etwaige Manipulation überprüft und mit bekannten Schwellwerten verglichen werden. Es ist bevorzugt, dass anschließend diverse Kennwerte und Parameter des Signals bestimmt bzw. berechnet werden umfassend die Kennwerte Start des Signals, Ende des Signals, lokale Maxima und Minima, lokale Geschwindigkeiten des Signals, Auslenkung, Amplituden, Periodenlänge von periodischen Signalen und ggf. weitere Merkmale um das Signal in einen vergleichbaren Datensatz zu überführen. Es ist insbesondere bevorzugt, anschließend diesen Datensatz mit anderen Datensätzen zu vergleichen und einem bekannten Datensatz, der beispielsweise in einer Datenbank liegt, zuzuordnen und somit das Signal zu dekodieren. In einer weiteren bevorzugten Ausführungsform findet der Abgleich des Datensatzes unter Nutzung eines zuvor aus Aufzeichnungen erstellten Machine Learning Models (Artificial neural networks) statt. Es war insbesondere überraschend, dass die Nutzung eines Machine Learning Models zur Dekodierung des Signals insbesondere für komplexe Signale mit vielen verschiedenen Parametern geeignet ist.

### Bezugszeichenliste:

- 10: Vorrichtung beziehungsweise dreidimensionales Objekt
- 12: elektrisch leitfähige Struktur
- 14: elektrisch nicht-leitfähiges Substrat
- 16: Hauptelement der elektrisch leitfähigen Struktur
- 18: Teilelement der elektrisch leitfähigen Struktur
- 20: Flächensensor
- 22: Flächensensor beinhaltendes Gerät
- 24: Elektrodengitter des Flächensensors
- 26: Zeilen des Elektrodengitters
- 27: Kreuzungen zwischen Zeilen und Spalten des Elektrodengitters
- 28: Spalten des Elektrodengitters
- 30: Relativbewegung zwischen Vorrichtung (10) und Flächensensor (20)
- 40: periodisches Signal
- 42: Periodenlänge des periodischen Signals
- 44: Amplitude des periodischen Signals
- 46: Touch-Event
- 50: Kontaktfläche (Unterseite)
- 52: Seitenfläche
- 54: Oberseite

## Patentansprüche

1. System zur Erzeugung eines periodischen Signals (40) auf einem kapazitiven Flächensensor (20), wobei das System eine Vorrichtung (10) sowie Gerät (22) mit einem kapazitiven Flächensensor (20) umfasst,
wobei
a) die Vorrichtung (10) ein dreidimensionales Objekt ist, wobei das dreidimensionale Objekt eine Kontaktfläche (50) aufweist, wobei eine elektrisch leitfähige Struktur (12) zumindest auf der Kontaktfläche (50) des dreidimensionalen Objekts angeordnet vorliegt
b) der kapazitive Flächensensor (20) ein Elektrodengitter (24) umfassend Zeilen (26) und Spalten (28) aufweist,
**dadurch gekennzeichnet, dass** die elektrisch leitfähige Struktur (12) und der Flächensensor (20) derart eingerichtet sind, dass bei einer Bewegung der Vorrichtung (10) relativ zum Flächensensor (20) entlang der Richtung einer Zeile (26) oder einer Spalte (28) des Elektrodengitters (24), ein periodisches Signal (40) erzeugt wird, welches orthogonal zur Bewegung der Vorrichtung (10) oszilliert.

2. System nach dem vorherigen Anspruch,
**dadurch gekennzeichnet, dass**
die Periodenlänge (42) des periodischen Signals (40) mit der Gitterkonstanten des Elektrodengitters (24) im kapazitiven Flächensensor (20) korreliert.

3. System nach Anspruch 1 oder 2,
**dadurch gekennzeichnet, dass**
die Periodenlänge (42) des periodischen Signals (40) mindestens 2 mm, bevorzugt mindestens 3 mm und besonders bevorzugt mindestens 4 mm beträgt und/oder maximal 9 mm, bevorzugt maximal 7 mm und besonders bevorzugt maximal 5 mm beträgt und/oder
die Amplitude (44) des periodischen Signals (40) mindestens 1 mm, bevorzugt mindestens 2 mm und besonders bevorzugt mindestens 3 mm beträgt und/oder bevorzugt maximal 60 mm und besonders bevorzugt maximal 40 mm beträgt.

4. System nach einem oder mehreren der vorangegangenen Ansprüche
**dadurch gekennzeichnet, dass**
die elektrisch leitfähige Struktur (12) dazu eingerichtet ist, einen Verlauf des periodischen Signals (40) auf dem kapazitiven Flächensensor (20) hinsichtlich eines Kurvenverlaufs, einer Amplitude (44) und/oder eines Flankenverlaufs festzulegen.

5. System nach einem oder mehreren der vorangegangenen Ansprüche,
**dadurch gekennzeichnet, dass**
die elektrisch leitfähige Struktur (12) dazu eingerichtet ist, mit mindestens zwei Zeilen (26) und mindestens zwei Spalten (28) eines Elektrodengitters (24) des kapazitiven Flächensensors (20) in Wechselwirkung zu stehen.

6. System nach einem oder mehreren der vorangegangenen Ansprüche,
**dadurch gekennzeichnet, dass**
die elektrisch leitfähige Struktur (12) mindestens zwei Teilbereiche mit zwei Flächenschwerpunkten aufweist, welche dazu eingerichtet sind bei Überlagerung mit einer Kreuzung des Elektrodengitters (24) ein Touch-Event zu erzeugen und im Falle keiner Überlagerung mit einer Kreuzung des Elektrodengitters (24) kein Touch-Event zu erzeugen, sodass bei einer Relativbewegung der Vorrichtung (10) entlang einer Zeile oder Spalte des Elektrodengitters (24) ein periodisches Signal (40) durch eine abwechselnde Erzeugung eines Touch-Event bei abwechselnder Überlagerung des ersten oder zweiten Flächenschwerpunktes mit Kreuzungen des Elektrodengitters erzeugt wird.

7. System nach einem oder mehreren der vorangegangenen Ansprüche,
**dadurch gekennzeichnet, dass**
die elektrisch leitfähige Struktur (12) mindestens zwei Teilbereiche aufweist, welche in Abhängigkeit der Positionierung auf dem Elektrodengitter (24) eine Mindestfläche von mehr als 20%, bevorzugt mehr als 30 %, und/oder eine Maximalfläche von weniger als 70%, bevorzugt weniger als 50%, der Fläche einer darunter liegenden Elektrodenkreuzung überdecken.

8. System nach einem oder mehreren der vorangegangenen Ansprüche
**dadurch gekennzeichnet, dass**
das System eine Datenverarbeitungsvorrichtung aufweist, welche dazu eingerichtet ist, das periodische Signal (40) auszuwerten, wobei auf der Datenverarbeitungsvorrichtung bevorzugt eine Software (,app') installiert vorliegt, welche Befehle umfasst, dynamische Kennwerte des periodischen Signals (40) auszuwerten und mit Referenzdaten zu vergleichen, wobei bevorzugt die dynamischen Kennwerte eine Periodenlänge (42), eine Amplitude (44) und/oder eine Periodendauer umfassen.

9. System nach dem vorherigen Anspruch
**dadurch gekennzeichnet, dass**
das den Flächensensor (20) beinhaltende Gerät (22) das periodische Signal als eine Menge von Touch-Events aufbereitet und eine Software dynamische Kennwerte der Menge von Touch-Events bestimmt.

10. Vorrichtung zur Erzeugung eines periodischen Signals (40) auf einem kapazitiven Flächensensor (20) mit einem Elektrodengitter (24) umfassend Zeilen (26) und Spalten (28), wobei
die Vorrichtung (10) ein dreidimensionales Objekt ist, wobei das dreidimensionale Objekt eine Kontaktfläche (50) aufweist, wobei eine elektrisch leitfähige Struktur (12) zumindest auf der Kontaktfläche (50) des dreidimensionalen Objekts angeordnet vorliegt **dadurch gekennzeichnet, dass**
die elektrisch leitfähige Struktur (12) und ein Flächensensor (20) derart eingerichtet sind, dass bei einer Bewegung der Vorrichtung (10) relativ zum Flächensensor (20) entlang der Richtung einer Zeile (26) oder einer Spalte (28) des Elektrodengitters (24), ein periodisches Signal (40) erzeugt wird, welches orthogonal zur Bewegung der Vorrichtung (10) oszilliert.

11. Vorrichtung gemäß dem vorherigen Anspruch
**dadurch gekennzeichnet, dass**
die elektrisch leitfähige Struktur (12) eine linienförmige Gestalt aufweist deren Breite 0,5 mm bis 8 mm, bevorzugt 1,5 mm bis 5 mm beträgt.

12. Vorrichtung gemäß einem der vorherigen Ansprüche 10 oder 11
**dadurch gekennzeichnet, dass**
die elektrisch leitfähige Struktur (12) mindestens ein linienförmiges Hauptelement (16) und mindestens ein linienförmiges Teilelement (18) umfasst, wobei das Hauptelement (16) und das Teilelement (18) galvanisch miteinander verbunden sind und bevorzugt einen Winkel von 10° bis 80°, besonders bevorzugt 20° bis 60° einschließen
und/oder wobei die Kontaktfläche (50) bevorzugt eine im Wesentlichen rechteckige Form aufweist und das Hauptelement (16) einen Winkel von 5° bis 45°, bevorzugt von 10° bis 35° zu einer der beiden Kanten der Kontaktfläche (50) aufweist.

13. Verwendung der Vorrichtung (10) nach einem oder mehreren der Ansprüche 10 bis 12 zur Erzeugung eines periodischen Signals (40) auf einem kapazitiven Flächensensor (20) mit einem Elektrodengitter umfassend Zeilen (26) und Spalten (28)
**dadurch gekennzeichnet, dass**
die elektrisch leitfähige Struktur (12) der Vorrichtung (10) in Wirkkontakt mit dem kapazitiven Flächensensor (20) gebracht wird und die Vorrichtung (10) entlang einer Zeile oder Spalte des Elektrodengitters (24) relativ zum kapazitiven Flächensensor (20) bewegt wird.

14. Kit zur Erzeugung und Auswertung eines periodischen Signals (40) auf einem kapazitiven Flächensensor (20) mit einem Elektrodengitter (24) mit Zeilen (26) und Spalten (28) umfassend
a) eine Vorrichtung (10), welche ein dreidimensionales Objekt ist, wobei das dreidimensionale Objekt eine Kontaktfläche (50) aufweist, wobei eine elektrisch leitfähige Struktur (12) zumindest auf der Kontaktfläche (50) des dreidimensionalen Objekts angeordnet vorliegt
b) eine Software (,app') zur Installation auf einem Gerät (22) umfassend den Flächensensor (20)
**dadurch gekennzeichnet, dass**
die elektrisch leitfähige Struktur (12) derart eingerichtet ist, dass bei einer Bewegung der Vorrichtung (10) relativ zum Flächensensor (20) entlang der Richtung einer Zeile (26) oder einer Spalte (28) des Elektrodengitters (24), ein periodisches Signal (40) erzeugt wird, welches orthogonal zur Bewegung der Vorrichtung (10) oszilliert und die Software Befehle umfasst, dynamische Kennwerte des periodischen Signals (40) zu bestimmen und mit Referenzdaten zu vergleichen.

15. Verfahren zur Erzeugung eines periodischen Signals auf einem Flächensensor (20) umfassend die folgenden Schritte:
a) Bereitstellen eines Systems gemäß einem der Ansprüche 1-9 umfassend eine Vorrichtung (10) mit einer elektrisch leitfähigen Struktur (12) sowie einem Gerät mit einem kapazitiven Flächensensor (20), welcher ein Elektrodengitter (24) umfassend Zeilen (26) und Spalten (28) aufweist,
b) Bewegen der Vorrichtung (10) relativ zum kapazitiven Flächensensor (20) entlang einer Zeile (26) oder Spalte (28), während die elektrisch leitfähige Struktur (12) im Wirkkontakt mit dem Flächensensor (20) vorliegt.

## Claims

1. System for generating a periodic signal (40) on a capacitive surface sensor (20), the system comprising a device (10) and an apparatus (22) having a capacitive surface sensor (20),
wherein
a) the device (10) is a three-dimensional object, the three-dimensional object having a contact surface (50), wherein an electrically conductive structure (12) is disposed at least on the contact surface (50) of the three-dimensional object
b) the capacitive surface sensor (20) has an electrode grid (24) comprising rows (26) and columns (28),
**characterized in that** the electrically conductive structure (12) and the capacitive surface sensor (20) are arranged such that upon movement of the device (10) relative to the surface sensor (20) along the direction of a row (26) or a column (28) of the electrode grid (24), a periodic signal (40) is generated which oscillates orthogonally to the movement of the device (10).

2. System according to the previous claim,
**characterized in that**
the period length (42) of the periodic signal (40) correlates with the grid constant of the electrode grid (24) in the capacitive surface sensor (20).

3. System according to claim 1 or 2,
**characterized in that**
the period length (42) of the periodic signal (40) is at least 2 mm, preferably at least 3 mm and particularly preferably at least 4 mm, and/or is at most 9 mm, preferably at most 7 mm and particularly preferably at most 5 mm
and/or
the amplitude (44) of the periodic signal (40) is at least 1 mm, preferably at least 2 mm and particularly preferably at least 3 mm and/or preferably at most 60 mm and particularly preferably at most 40 mm.

4. System according to one or more of the preceding claims
**characterized in that**
the electrically conductive structure (12) is arranged to define a course of the periodic signal (40) on the capacitive surface sensor (20) with respect to a curve shape, an amplitude (44) and/or an edge shape.

5. System according to one or more of the preceding claims,
**characterized in that**
the electrically conductive structure (12) is adapted to interact with at least two rows (26) and at least two columns (28) of an electrode grid (24) of the capacitive surface sensor (20).

6. System according to one or more of the preceding claims,
**characterized in that**
the electrically conductive structure (12) comprises at least two sub-regions having two centroids, which are arranged to generate a touch event in case of overlap with an intersection of the electrode grid (24) and not to generate a touch event in case of no overlap with an intersection of the electrode grid (24), so that upon relative movement of the device (10) along a row or column of the electrode grid (24), a periodic signal (40) is generated by alternately generating a touch event upon alternate superposition of the first or second centroid with intersections of the electrode grid.

7. System according to one or more of the preceding claims,
**characterized in that**
the electrically conductive structure (12) has at least two sub-regions which, depending on the positioning on the electrode grid (24), cover a minimum area of more than 20%, preferably more than 30%, and/or a maximum area of less than 70%, preferably less than 50%, of the area of an underlying electrode intersection.

8. System according to one or more of the preceding claims
**characterized in that**
the system has a data processing device which is adapted to evaluate the periodic signal (40), the data processing device preferably having installed on it software ('app') which comprises commands to evaluate dynamic characteristics of the periodic signal (40) and to compare them with reference data, wherein the dynamic characteristics comprise a period length (42), an amplitude (44) and/or a period duration.

9. System according to the previous claim
**characterized in that**
the device (22) including the surface sensor (20) processes the periodic signal as a set of touch events, and software determines dynamic characteristics of the set of touch events.

10. Device for generating a periodic signal (40) on a capacitive surface sensor (20) having an electrode grid (24) comprising rows (26) and columns (28),
wherein the device (10) is a three-dimensional object, wherein the three-dimensional object has a contact surface (50), wherein an electrically conductive structure (12) is present at least on the contact surface (50) of the three-dimensional object,
**characterized in that** the electrically conductive structure (12) and a surface sensor (20) are arranged such that upon a movement of the device (10) relative to the surface sensor (20) along the direction of a row (26) or a column (28) of the electrode grid (24), a periodic signal (40) is generated which oscillates orthogonally to the movement of the device (10).

11. Device according to the previous claim
**characterized in that**
the electrically conductive structure (12) has a linear shape whose width is 0.5 mm to 8 mm, preferably 1.5 mm to 5 mm.

12. Device according to any one of the preceding claims 10 or 11
**characterized in that**
the electrically conductive structure (12) comprises at least one line-shaped main element (16) and at least one line-shaped sub-element (18), wherein the main element (16) and the sub-element (18) are galvanically connected to each other and preferably enclose an angle of 10° to 80°, more preferably 20° to 60°
and/or
the contact surface (50) has preferably a substantially rectangular shape and the main element (16) has an angle of 5° to 45°, preferably 10° to 35° to one of the two edges of the contact surface (50).

13. Use of the device (10) according to one or more of claims 10 to 12 for generating a periodic signal (40) on a capacitive surface sensor (20) having an electrode grid comprising rows (26) and columns (28)
**characterized in that**
the electrically conductive structure (12) of the device (10) is brought into operative contact with the capacitive surface sensor (20) and the device (10) is moved along a row or column of the electrode grid (24) relative to the capacitive surface sensor (20).

14. A kit for generating and evaluating a periodic signal (40) on a capacitive surface sensor (20) having an electrode grid (24) with rows (26) and columns (28) comprising
a) a device (10) which is a three-dimensional object, wherein the three-dimensional object has a contact surface (50), wherein an electrically conductive structure (12) is present at least on the contact surface (50) of the three-dimensional object,
b) software ('app') for installation on a device (22) comprising the surface sensor (20),
**characterized in that**
the electrically conductive structure (12) is arranged in such a way that upon a movement of the device (10) relative to the surface sensor (20) along the direction of a row (26) or a column (28) of the electrode grid (24), a periodic signal (40) is generated which oscillates orthogonally to the movement of the device (10) and the software comprises commands to determine dynamic characteristics of the periodic signal (40) and to compare them with reference data.

15. A method of generating a periodic signal on a surface sensor (20) comprising the following steps:
a) Providing a system according to any one of claims 1-9 comprising a device (10) having an electrically conductive structure (12) and an apparatus having a capacitive surface sensor (20) having an electrode grid (24) comprising rows (26) and columns (28),
b) Moving the device (10) relative to the capacitive surface sensor (20) along a row (26) or column (28) while the electrically conductive structure (12) is in operative contact with the surface sensor (20).

## Revendications

1. Système de génération d'un signal périodique (40) sur un capteur superficiel capacitif (20), dans lequel le système comprend un dispositif (10) et un appareil (22) doté d'un capteur superficiel capacitif (20),
dans lequel
a) le dispositif (10) est un objet tridimensionnel, dans lequel l'objet tridimensionnel présente une surface de contact (50), dans lequel une structure électriquement conductrice (12) est disposée au moins sur la surface de contact (50) de l'objet tridimensionnel
b) le capteur superficiel capacitif (20) présente une grille d'électrodes (24) comprenant des rangées (26) et des colonnes (28),
**caractérisé en ce que** la structure électriquement conductrice (12) et le capteur superficiel (20) sont conçus de sorte que lorsque le dispositif (10) se déplace par rapport au capteur superficiel (20) dans la direction d'une rangée (26) ou d'une colonne (28) de la grille d'électrodes (24), un signal périodique (40) est généré, qui oscille orthogonalement au mouvement du dispositif (10).

2. Système selon la revendication précédente,
**caractérisé en ce que**
la longueur de période (42) du signal périodique (40) est corrélée à la constante de grille de la grille d'électrodes (24) dans le capteur superficiel capacitif (20).

3. Système selon la revendication 1 ou 2,
**caractérisé en ce que**
la longueur de période (42) du signal périodique (40) est d'au moins 2 mm, de préférence d'au moins 3 mm et de manière particulièrement préférée d'au moins 4 mm et/ou de maximum 9 mm, de préférence de maximum 7 mm et de manière particulièrement préférée de maximum 5 mm et/ou l'amplitude (44) du signal périodique (40) est d'au moins 1 mm, de préférence d'au moins 2 mm et de manière particulièrement préférée d'au moins 3 mm et/ou de préférence de maximum 60 mm et de manière particulièrement préférée de maximum 40 mm.

4. Système selon une ou plusieurs des revendications précédentes,
**caractérisé en ce que**
la structure électriquement conductrice (12) est conçue pour déterminer une évolution du signal périodique (40) sur le capteur superficiel capacitif (20) en fonction d'une évolution de courbe, d'une amplitude (44) et/ou d'une évolution de flanc.

5. Système selon une ou plusieurs des revendications précédentes,
**caractérisé en ce que**
la structure électriquement conductrice (12) est conçue pour être en interaction avec au moins deux rangées (26) et au moins deux colonnes (28) d'une grille d'électrodes (24) du capteur superficiel capacitif (20).

6. Système selon une ou plusieurs des revendications précédentes,
**caractérisé en ce que**
la structure électriquement conductrice (12) présente au moins deux zones partielles avec deux centres de gravité superficiels, qui sont conçues pour générer un événement tactile en cas de superposition avec une intersection de la grille d'électrodes (24) et, en cas d'absence de superposition avec une intersection de la grille d'électrodes (24), aucun événement tactile, de sorte que lors d'un déplacement relatif du dispositif (10) le long d'une rangée ou d'une colonne de la grille d'électrodes (24), un signal périodique (40) est généré par génération alternée d'un événement tactile avec superposition alternée du premier ou du second centre de gravité superficiel avec des intersections de la grille d'électrodes.

7. Système selon une ou plusieurs des revendications précédentes,
**caractérisé en ce que**
la structure électriquement conductrice (12) présente au moins deux zones partielles qui, en fonction du positionnement sur la grille d'électrodes (24), recouvrent une surface minimale supérieure à 20 %, de préférence supérieure à 30 %, et/ou une surface maximale inférieure à 70 %, de préférence inférieure à 50 % de la superficie d'une intersection d'électrodes sous-jacente.

8. Système selon une ou plusieurs des revendications précédentes,
**caractérisé en ce que**
le système comprend un dispositif de traitement de données qui est configuré pour évaluer le signal périodique (40), dans lequel un logiciel (« application ») est de préférence installé sur le dispositif de traitement de données, qui comprend des commandes pour évaluer des caractéristiques dynamiques du signal périodique (40) et les comparer avec des données de référence, dans lequel les caractéristiques dynamiques comprennent de préférence une longueur de période (42), une amplitude (44) et/ou une durée de période.

9. Système selon la revendication précédente,
**caractérisé en ce que**
l'appareil (22) contenant le capteur superficiel (20) traite le signal périodique comme un ensemble d'événements tactiles et un logiciel détermine des caractéristiques dynamiques de l'ensemble d'événements tactiles.

10. Dispositif de génération d'un signal périodique (40) sur un capteur superficiel capacitif (20) doté d'une grille d'électrodes (24) comprenant des rangées (26) et des colonnes (28), dans lequel
le dispositif (10) est un objet tridimensionnel, dans lequel l'objet tridimensionnel présente une surface de contact (50), dans lequel une structure électriquement conductrice (12) est disposée au moins sur la surface de contact (50) de l'objet tridimensionnel,
**caractérisé en ce que**
la structure électriquement conductrice (12) et un capteur superficiel (20) sont conçus de sorte que lorsque le dispositif (10) se déplace par rapport au capteur superficiel (20) dans la direction d'une rangée (26) ou d'une colonne (28) de la grille d'électrodes (24), un signal périodique (40) est généré, qui oscille orthogonalement au mouvement du dispositif (10) .

11. Dispositif selon la revendication précédente
**caractérisé en ce que**
la structure électriquement conductrice (12) a une forme linéaire dont la largeur est de 0,5 mm à 8 mm, de préférence de 1,5 mm à 5 mm.

12. Dispositif selon l'une des revendications précédentes 10 ou 11
**caractérisé en ce que**
la structure électriquement conductrice (12) comprend au moins un élément principal linéaire (16) et au moins un élément partiel linéaire (18), dans lequel l'élément principal (16) et l'élément partiel (18) sont reliés galvaniquement l'un à l'autre et de préférence incluent un angle de 10° à 80°, de manière particulièrement préférée de 20° à 60°
et/ou dans lequel la surface de contact (50) présente de préférence une forme sensiblement rectangulaire et l'élément principal (16) présente un angle de 5° à 45°, de préférence de 10° à 35°, par rapport à l'un des deux bords de la surface de contact (50).

13. Utilisation du dispositif (10) selon une ou plusieurs des revendications 10 à 12 pour générer un signal périodique (40) sur un capteur superficiel capacitif (20) doté d'une grille d'électrodes comprenant des rangées (26) et des colonnes (28), **caractérisée en que**
la structure électriquement conductrice (12) du dispositif (10) est mise en contact efficace avec le capteur superficiel capacitif (20) et le dispositif (10) est déplacé le long d'une rangée ou d'une colonne de la grille d'électrodes (24) par rapport au capteur superficiel capacitif (20).

14. Kit de génération et d'évaluation d'un signal périodique (40) sur un capteur superficiel capacitif (20) doté d'une grille d'électrodes (24) comportant des rangées (26) et des colonnes (28), comprenant
a) un dispositif (10), qui est un objet tridimensionnel, dans lequel l'objet tridimensionnel présente une surface de contact (50), dans lequel une structure électriquement conductrice (12) est disposée au moins sur la surface de contact (50) de l'objet tridimensionnel
b) un logiciel (« application ») à installer sur un appareil (22) comprenant le capteur superficiel (20)
**caractérisé en ce que**
la structure électriquement conductrice (12) est conçue de sorte que lorsque le dispositif (10) se déplace par rapport au capteur superficiel (20) dans la direction d'une rangée (26) ou d'une colonne (28) de la grille d'électrodes (24), un signal périodique (40) est généré, qui oscille orthogonalement au mouvement du dispositif (10), et le logiciel comprend des commandes pour déterminer des caractéristiques dynamiques du signal périodique (40) et les comparer avec des données de référence.

15. Procédé de génération d'un signal périodique sur un capteur superficiel (20) comprenant les étapes suivantes :
a) fourniture d'un système selon l'une des revendications 1 à 9, comprenant un dispositif (10) doté d'une structure électriquement conductrice (12) et d'un appareil comportant un capteur superficiel capacitif (20), qui présente une grille d'électrodes (24) comprenant des rangées (26) et des colonnes (28),
b) déplacement du dispositif (10) par rapport au capteur superficiel capacitif (20) le long d'une rangée (26) ou d'une colonne (28) tandis que la structure électriquement conductrice (12) est en contact efficace avec le capteur superficiel (20).
